# EUROPEAN PATENT APPLICATION

(11) **EP 4 618 064 A1**
(43) Date of publication of application: **17.09.2025**
(21) Application number: 24814115.2
(22) Date of filing: 07.05.2024
(51) Int. Cl.: G09F 9/30

(54) **ELECTRONIC DEVICE, DISPLAY MODULE, AND SUPPORTING MEMBER**

(30) Priority: 26.05.2023 CN 202321319962 U
(71) Applicant: Huawei Technologies Co., Ltd., Shenzhen, Guangdong 518129 (CN)
(72) Inventor: YU, Weidong, Shenzhen, Guangdong 518129 (CN); MAO, Weihua, Shenzhen, Guangdong 518129 (CN); LV, Ren, Shenzhen, Guangdong 518129 (CN)
(74) Representative: Epping - Hermann - Fischer
(86) International application number: PCT/CN2024/091347
(87) International publication number: WO 2024/244910

(57) **Abstract**

This application provides an electronic device, a display module, and a support member. The support member has a first fastening part, a first bent part, a second fastening part, a second bent part, and a third fastening part, and stiffness of the first fastening part, stiffness of the second fastening part, and stiffness of the third fastening part are greater than stiffness of the first bent part and stiffness of the second bent part. The display panel has a first display area, a second display area, a third display area, a fourth display area, and a fifth display area. The first fastening part is fastened to the first display area, the first bent part is fastened to the second display area, the second fastening part is fastened to the third display area, the second bent part is fastened to the fourth display area, and the third fastening part is fastened to the fifth display area. The first bent part includes a first bent sub-part, a first bent main part, and a second bent sub-part. The first bent main part may be bent in a folding direction, and the first bent sub-part and the second bent sub-part may be bent away from the folding direction. The support member can meet both a stiffness requirement and bendability performance.

## Description

This application claims priority to Chinese Patent Application No. 202321319962.4, filed with the China National Intellectual Property Administration on May 26, 2023, and entitled "ELECTRONIC DEVICE, DISPLAY MODULE, AND SUPPORT MEMBER", which is incorporated herein by reference in its entirety.

### TECHNICAL FIELD

This application relates to the field of foldable electronic product technologies, and in particular, to an electronic device, a display module, and a support member.

### BACKGROUND

For a foldable electronic product that can be folded more than once, a support member is usually disposed on the bottom of a flexible display panel, to improve strength of the flexible display panel through the support member. However, as strength of the flexible display panel increases, it is difficult for the flexible display panel to adapt to a foldable mechanism of an electronic device when the electronic device is in a second folded state. Therefore, it is particularly urgent to dispose a display module that can meet both a stiffness requirement and bendability performance.

### SUMMARY

This application provides a support member, a display module, and an electronic device that can meet both a stiffness requirement and bendability performance.

According to a first aspect, an embodiment of this application provides an electronic device. The electronic device includes a first housing, a second housing, a third housing, a first foldable mechanism, a second foldable mechanism, and a display module. The first foldable mechanism is connected to the first housing and the second housing, and the second foldable mechanism is connected to the second housing and the third housing.

The display module includes a display panel and a support member, and the support member is fastened to a non-display surface of the display panel.

The support member has a first fastening part, a first bent part, a second fastening part, a second bent part, and a third fastening part that are sequentially disposed in a first direction, where stiffness of the first fastening part, stiffness of the second fastening part, and stiffness of the third fastening part are greater than stiffness of the first bent part and stiffness of the second bent part, and the first direction is a direction from the first housing to the third housing when the electronic device is in an unfolded state.

The display panel has a first display area, a second display area, a third display area, a fourth display area, and a fifth display area that are disposed in the first direction. A first surface of the first fastening part is fastened to the first display area, a first surface of the first bent part is fastened to the second display area, a first surface of the second fastening part is fastened to the third display area, a first surface of the second bent part is fastened to the fourth display area, and a first surface of the third fastening part is fastened to the fifth display area; and when the electronic device is in the unfolded state, the first surface of the first fastening part, the first surface of the first bent part, the first surface of the second fastening part, the first surface of the second bent part, and the first surface of the third fastening part are located on a same surface.

A second surface of the first fastening part is fastened to the first housing, a second surface of the second fastening part is fastened to the second housing, and a second surface of the third fastening part is fastened to the third housing, where the first surface of the first fastening part is opposite to the second surface of the first fastening part, the first surface of the second fastening part is opposite to the second surface of the second fastening part, and the first surface of the third fastening part is opposite to the second surface of the third fastening part.

In a process in which the first housing and the second housing are unfolded or folded relative to each other, the first bent part is bent. In a process in which the second housing and the third housing are unfolded or folded relative to each other, the second bent part is bent.

When the electronic device is in the unfolded state, the first fastening part, the first bent part, the second fastening part, the second bent part, and the third fastening part form a plate-like structure. When the electronic device is in a first folded state, the first fastening part, the first bent part, and the second fastening part form a plate-like structure, the second bent part is bent, the third fastening part and the second fastening part are stacked, and the first display area, the second display area, the third display area, the fourth display area, and the fifth display area are all located on an outer side of the electronic device.

When the electronic device is in a second folded state, the first bent part and the second bent part are bent, the first fastening part, the second fastening part, and the third fastening part are stacked, the first display area, the second display area, and the third display area are located in an accommodation space formed by the first fastening part, the first bent part, and the second fastening part, and the fifth display area and at least a portion of the fourth display area are located on the outer side of the electronic device.

The first bent part includes a first bent sub-part, a first bent main part, and a second bent sub-part that are sequentially arranged in the first direction. In the process in which the first housing and the second housing are unfolded or folded relative to each other, the first bent main part is bent in a folding direction, the first bent sub-part and the second bent sub-part are bent away from the folding direction, the first bent sub-part, the first bent main part, and the second bent sub-part form an accommodation space, and at least a portion of the second display area is located in the accommodation space.

It may be understood that the first bent part has minimum stiffness when being disposed in the first fastening part, the first bent part, the second fastening part, and the third fastening part. In this way, stiffness of a second part of the display module including the first bent part and the second display area is small. In this case, when the electronic device is in a second folded state, the second part of the display module is more likely to be bent. In addition, among the first fastening part, the second fastening part, the second bent part, and the third fastening part, the second bent part has minimum stiffness. In this way, stiffness of a fourth part of the display module including the second bent part and the fourth display area is small. In this case, when the electronic device is in the first folded state or the second folded state, the fourth part of the display module is more likely to be bent. In addition, the stiffness of the first fastening part, the stiffness of the second fastening part, and the stiffness of the third fastening part are set to be greater than the stiffness of the first bent part and the stiffness of the second bent part, so that the stiffness of the first fastening part, the stiffness of the second fastening part, and the stiffness of the third fastening part are large, and the first fastening part, the second fastening part, and the third fastening part may respectively provide rigid support for the first display area, the third display area, and the fifth display area of the display panel. Therefore, the support member in this application may be configured to provide rigid support for the display panel, to improve support strength of the display panel. In addition, the support member can also be bent under external force while ensuring certain stiffness. In other words, the support member further has certain bendable performance.

It may be understood that, when the electronic device switches between the first folded state and the second folded state (that is, in the process in which the electronic device is unfolded or folded relatively), the first bent main part is bent in the folding direction. In this case, the first bent sub-part and the second bent sub-part of the first bent part can be disposed close to each other, so that the first bent part of the support member and the second display area of the display panel can be bent into a shape with a small volume. In this way, the first bent part of the support member may meet a bending requirement of the second display area of the display panel, so that the first bent part of the support member and the second display area of the display panel can adapt to an inward foldable mechanism.

In addition, the first bent sub-part and the second bent sub-part of the first bent part are disposed to bend away from the folding direction, so that the first bent sub-part and the second bent sub-part of the first bent part can be further disposed close to each other. In this case, the first bent part of the support member and the second display area of the display panel can be bent into a shape with a smaller volume. In this way, the first bent part of the support member may meet the bending requirement of the second display area of the display panel better, so that the first bent part of the support member and the second display area of the display panel can adapt to the inward foldable mechanism better.

In a possible implementation, the stiffness of the first fastening part, the stiffness of the second fastening part, stiffness of the first bent sub-part, and stiffness of the second bent sub-part are all greater than stiffness of the first bent main part.

It may be understood that, among the first bent sub-part, the first bent main part, and the second bent sub-part of the first bent part, the first bent main part has minimum stiffness, so that the first bent main part has a better bending capability. In other words, the first bent main part can be bent more greatly when the electronic device is in the second folded state. In this case, the first bent sub-part and the second bent sub-part of the first bent part can be disposed close to each other to a larger extent. The first bent part of the support member and the second display area of the display panel can be bent into a shape with a smaller volume. In this way, the first bent part of the support member may meet the bending requirement of the second display area of the display panel better, so that the first bent part of the support member and the second display area of the display panel can adapt to the accommodation space of the inward foldable mechanism better.

In addition, in this implementation, both the stiffness of the first bent sub-part and the stiffness of the second bent sub-part are set to be greater than the stiffness of the first bent main part, so that both the first bent sub-part and the second bent sub-part of the first bent part have a specific bending capability. In this case, both the first bent sub-part and the second bent sub-part of the first bent part are bent away from the folding direction. The first bent sub-part and the second bent sub-part of the first bent part can be further disposed close to each other, and the first connection part and the second connection part of the first bent part can be further disposed close to each other. In this case, the first bent part of the support member and the second display area of the display panel can be bent into a shape with a smaller volume. In this way, the first bent part of the support member may meet the bending requirement of the second display area of the display panel better, so that the first bent part of the support member and the second display area of the display panel can adapt to the accommodation space of the inward foldable mechanism better.

In a possible implementation, a thickness of the first fastening part, a thickness of the second fastening part, a thickness of the first bent sub-part, and a thickness of the second bent sub-part are greater than a thickness of the first bent main part. In this way, the stiffness of the first fastening part, the stiffness of the second fastening part, the stiffness of the first bent sub-part, and the stiffness of the second bent sub-part may be all greater than the stiffness of the first bent main part. In a possible implementation, a weight per unit volume of the first fastening part, a weight per unit volume of the second fastening part, a weight per unit volume of the first bent sub-part, and a weight per unit volume of the second bent sub-part are greater than a weight per unit volume of the first bent main part. In this way, the stiffness of the first fastening part, the stiffness of the second fastening part, the stiffness of the first bent sub-part, and the stiffness of the second bent sub-part may be all greater than the stiffness of the first bent main part.

In a possible implementation, in the first direction, a width of the first bent main part is greater than a width of the first bent sub-part, and the width of the first bent main part is greater than a width of the second bent sub-part. In this way, this helps reduce overall stiffness of the first bent part, so that the first bent part of the support member and the second display area of the display panel can be bent into a shape with a small volume. The first bent part of the support member may meet the bending requirement of the second display area of the display panel better, so that the first bent part of the support member and the second display area of the display panel can adapt to the inward foldable mechanism better.

In a possible implementation, the first bent main part is provided with a plurality of rows of through holes, and the through hole penetrates two plate surfaces of the support member. This helps reduce overall stiffness of the first bent main part to a large extent.

In a possible implementation, the through hole extends in a second direction, and the second direction is parallel to the plate surface of the support member, and is perpendicular to the first direction. This helps reduce overall stiffness of the first bent main part to a large extent.

In a possible implementation, the through hole is bar-shaped. This helps reduce overall stiffness of the first bent main part to a large extent.

In a possible implementation, a first row of through holes of the plurality of rows of through holes penetrate a first side edge of the first bent main part in the second direction; and/or a last row of through holes of the plurality of rows of through holes penetrate a second side edge of the first bent main part in the second direction, where the second direction is parallel to the plate surface of the support member, and is perpendicular to the first direction. This helps reduce stiffness of the first side edge of the first bent main part and/or the second side edge of the first bent main part to a large extent, so that bending performance of the first bent main part is improved, and overall stiffness of the first bent main part is further reduced to a large extent.

In a possible implementation, the first bent sub-part and the second bent sub-part are symmetrically disposed with respect to the first bent main part.

In a possible implementation, the first bent sub-part is provided with a plurality of rows of first through holes, and the first through hole penetrates two plate surfaces of the support member. This helps reduce overall stiffness of the first bent sub-part.

In a possible implementation, the first through hole extends in a second direction, and the second direction is parallel to the plate surface of the support member, and is perpendicular to the first direction.

In a possible implementation, the first through hole is bar-shaped.

In a possible implementation, the first bent part further includes a first connection part and a second connection part; the first connection part is located between the first bent sub-part and the first bent main part, and the second connection part is located between the second bent sub-part and the first bent main part; stiffness of the first connection part and stiffness of the second connection part are greater than the stiffness of the first bent sub-part, the stiffness of the first bent main part, and the stiffness of the second bent sub-part; and in the process in which the first housing and the second housing are unfolded or folded relative to each other, the first bent sub-part, the first connection part, the first bent main part, the second connection part, and the second bent sub-part jointly form the accommodation space.

It may be understood that the stiffness of the first connection part and the stiffness of the second connection part are set to be greater than the stiffness of the first bent sub-part, the stiffness of the first bent main part, and the stiffness of the second bent sub-part, to ensure that the first bent part has specific stiffness as a whole, so as to provide rigid support for the second display area of the display panel.

In a possible implementation, the first connection part and the second connection part are symmetrically disposed with respect to the first bent main part.

In a possible implementation, the first connection part and the second connection part are complete plate-like structures. This helps ensure that the first connection part and the second connection part have certain stiffness.

In a possible implementation, in a second direction, a second through hole or a second groove is provided on at least one side edge of the first connection part, where the second direction is parallel to a plate surface of the support member, and is perpendicular to the first direction.

It may be understood that the second through hole or the second groove is provided on at least one side edge of the first connection part, to reduce stiffness of the first connection part. In other words, the first connection part has specific flexibility. In this case, the stiffness of the first connection part may provide a transitional function between the stiffness of the first bent sub-part and the stiffness of the first bent main part. In other words, stiffness of a connection area between the first bent sub-part and the first bent main part is not high. The stiffness of the first bent sub-part, the stiffness of the first connection part, and the stiffness of the first bent main part are continuous. In this way, when the electronic device is impacted due to falling, a bump with a large bending amplitude is unlikely to be generated on a side edge of the first connection part, to ensure that the first connection part can be restored after impact, that is, the first connection part is unlikely to be damaged. In other words, when the electronic device is impacted due to falling, the support member is unlikely to be folded.

In a possible implementation, the second through holes or the second grooves are spaced away from each other on a side edge of the first connection part, in other words, a second through hole group of the first connection part does not penetrate the side edge of the first connection part. In this way, the stiffness of the first connection part is unlikely to be reduced to a large extent. The stiffness of the first connection part may provide a gently transitional function between the stiffness of the first bent sub-part and the stiffness of the first bent main part. In other words, stiffness of a connection area between the first bent sub-part and the first bent main part is not low. In this case, the stiffness of the first bent sub-part, the stiffness of the first connection part, and the stiffness of the first bent main part are more continuous. In this way, when the electronic device is impacted due to falling, a bump with a large bending amplitude is more unlikely to be generated on a side edge of the first connection part, to ensure that the first connection part can be restored after impact, that is, the first connection part is unlikely to be damaged. In other words, when the electronic device is impacted due to falling, the support member is unlikely to be folded.

In a possible implementation, a thickness of the first connection part and a thickness of the second connection part are greater than a thickness of the first bent sub-part, a thickness of the first bent main part, and a thickness of the second bent sub-part; or a weight per volume of the first connection part and a weight per volume of the second connection part are greater than the weight per volume of the first bent sub-part, the weight per volume of the first bent main part, and the weight per volume of the second bent sub-part. In this way, the stiffness of the first connection part and the stiffness of the second connection part may be greater than the stiffness of the first bent sub-part, the stiffness of the first bent main part, and the stiffness of the second bent sub-part.

In a possible implementation, the support member is provided with a first recessed area, the first recessed area forms an opening on a side edge of the first bent sub-part and/or a side edge of the first connection part and/or a side edge of the first bent main part and/or a side edge of the second connection part and/or a side edge of the second bent sub-part, and a portion of an end part of the first foldable mechanism is located in the first recessed area.

It may be understood that the first recessed area is disposed on the portion of the end part of the first foldable mechanism, so that the first foldable mechanism may use a space of the support member in a Y-axis direction, that is, the first foldable mechanism and the support member have an overlapping area in the Y-axis direction. This helps reduce a black-edge area of the electronic device, that is, helps the electronic device implement a narrow bezel design.

In a possible implementation, the first foldable mechanism includes at least a first inward foldable plate and a second inward foldable plate; and when the electronic device is in the unfolded state, both the first inward foldable plate and the second inward foldable plate are stacked with the first bent part. It may be understood that, in this way, when the electronic device is unfolded to the unfolded state, and the first bent part is subject to pressing force, squeezing force, impact force, or the like, the first inward foldable plate and the second inward foldable plate may be configured to improve a pressure resistance capability and an impact resistance capability of the first bent part, in other words, it is ensured that the first bent part is not prone to a problem like a depression.

In a possible implementation, both the first inward foldable plate and the second inward foldable plate are partially fastened to the first bent part.

It may be understood that, in a folding process of the electronic device, both the first inward foldable plate and the second inward foldable plate may pull, through the first bent part of the support member, the second display area of the display panel to be inward folded (that is, bent in a direction close to a first hinge structure), and therefore, the second display area of the display panel is prevented from arching in a direction away from the first hinge structure, that is, the second display area of the display panel is prevented from arching. In addition, in a process of unfolding the electronic device, both the first inward foldable plate and the second inward foldable plate may drive, through the first bent part of the support member, the second display area of the display panel to unfold.

In a possible implementation, the first bent part further includes a first connection part and a second connection part, the first connection part is located between the first bent sub-part and the first bent main part, and the second connection part is located between the second bent sub-part and the first bent main part.

The first connection part is fastened to the first inward foldable plate, and the second connection part is fastened to the second inward foldable plate.

In the process in which the first housing and the second housing are unfolded or folded relative to each other, the first bent sub-part, the first connection part, the first bent main part, the second connection part, and the second bent sub-part jointly form the accommodation space.

It may be understood that, in the folding process of the electronic device, both the first inward foldable plate and the second inward foldable plate may pull, through the first connection part and the second connection part of the support member, the second display area of the display panel to be inward folded, and therefore, the second display area of the display panel is prevented from arching in a direction away from the folding direction, that is, the second display area of the display panel is prevented from arching.

In a possible implementation, the second bent part is provided with a plurality of rows of penetrating hole groups, the plurality of rows of penetrating hole groups are spaced away from each other in a second direction, the penetrating hole group includes a plurality of penetrating holes that are spaced away from each other, the plurality of penetrating holes are arranged in the first direction, the penetrating hole penetrates two plate surfaces of the support member, and the second direction is parallel to the plate surface of the support member, and is perpendicular to the first direction. This helps reduce overall stiffness of the second bent part to a large extent.

In a possible implementation, the penetrating hole is bar-shaped, and the penetrating hole extends in the second direction. This helps reduce overall stiffness of the second bent part to a large extent. In a possible implementation, the plurality of rows of penetrating hole groups include a first-row penetrating hole group, and the first-row penetrating hole group is close to a first side edge of the second bent part; and the first-row penetrating hole group includes first-type penetrating holes and second-type penetrating holes, the second-type penetrating holes are located on two sides of the first-type penetrating hole, the first-type penetrating hole further penetrates the first side edge, and the second-type penetrating holes are spaced away from each other on the first side edge.

It may be understood that the first-type penetrating hole is disposed to penetrate the first side edge of the second bent part, so that stiffness of a middle part of the first side edge of the second bent part is small, that is, the middle part of the first side edge of the second bent part is more likely to be bent. In addition, the second-type penetrating hole is disposed to not penetrate the first side edge of the second bent part, so that stiffness at two ends of the first side edge of the second bent part is not small. In this way, when the electronic device is impacted due to falling, a bump with a large bending amplitude is unlikely to be generated at two ends of the first side edge of the second bent part, to ensure that the second bent part can be restored after impact, that is, the second bent part is unlikely to be damaged. In other words, when the electronic device is impacted due to falling, the support member is unlikely to be folded.

In a possible implementation, the second bent part is provided with a second recessed area, the second recessed area forms an opening on a first side edge or a second side edge of the second bent part, and a portion of an end part of the second foldable mechanism is located in the second recessed area. In this way, the second foldable mechanism may use a space of the support member in the Y-axis direction, that is, the second foldable mechanism and the support member have an overlapping area in the Y-axis direction. This helps reduce a black-edge area of the electronic device, that is, helps the electronic device implement a narrow bezel design.

In a possible implementation, the second surface of the first fastening part is fastened to the first housing through a first adhesive layer, the second surface of the second fastening part is fastened to the second housing through a second adhesive layer, and the second surface of the third fastening part is fastened to the third housing through a third adhesive layer; and both the first adhesive layer and the second adhesive layer are annular, and the third adhesive layer is C-shaped.

Both the first adhesive layer and the second adhesive layer are disposed to be annular, and the third adhesive layer is C-shaped, so that the support member can be ensured to be stably connected to the first housing, the second housing, and the third housing, and a space occupied by the adhesive layer can be reduced as much as possible. In this way, space utilization of the housing is improved. According to a second aspect, this application provides a display module. The display module includes a display panel and a support member, and the support member is fastened to a non-display surface of the display panel.

The support member has a first fastening part, a first bent part, a second fastening part, a second bent part, and a third fastening part that are sequentially disposed in a first direction, where stiffness of the first fastening part, stiffness of the second fastening part, and stiffness of the third fastening part are greater than stiffness of the first bent part and stiffness of the second bent part, and the first direction is a direction from the first fastening part to the third fastening part when the support member is in an unfolded state.

The display panel has a first display area, a second display area, a third display area, a fourth display area, and a fifth display area that are disposed in the first direction.

The first fastening part is fastened to the first display area, the first bent part is fastened to the second display area, the second fastening part is fastened to the third display area, the second bent part is fastened to the fourth display area, and the third fastening part is fastened to the fifth display area.

In a process in which the first fastening part and the second fastening part are unfolded or folded relative to each other, the first bent part is bent; and in a process in which the second fastening part and the third fastening part are unfolded or folded relative to each other, the second bent part is bent.

When the support member is in the unfolded state, the first fastening part, the first bent part, the second fastening part, the second bent part, and the third fastening part form a plate-like structure. When the support member is in a first folded state, the first fastening part, the first bent part, and the second fastening part form a plate-like structure, the second bent part is bent, the third fastening part and the second fastening part are stacked, and the first display area, the second display area, the third display area, the fourth display area, and the fifth display area are all located on an outer side of the support member.

When the support member is in a second folded state, the first bent part and the second bent part are bent, the first fastening part, the second fastening part, and the third fastening part are stacked, the first display area, the second display area, and the third display area are located in an accommodation space formed by the first fastening part, the first bent part, and the second fastening part, and the fifth display area and at least a portion of the fourth display area are located on the outer side of the support member.

The first bent part includes a first bent sub-part, a first bent main part, and a second bent sub-part that are sequentially arranged in the first direction.

In the process in which the first fastening part and the second fastening part are unfolded or folded relative to each other, the first bent main part is bent in a folding direction, the first bent sub-part and the second bent sub-part are bent away from the folding direction, the first bent sub-part, the first bent main part, and the second bent sub-part form an accommodation space, and at least a portion of the second display area is located in the accommodation space.

It may be understood that the first bent part has minimum stiffness when being disposed in the first fastening part, the first bent part, the second fastening part, and the third fastening part. In this way, stiffness of a second part of the display module including the first bent part and the second display area is small. In this case, when the support member is in a second folded state, the second part of the display module is more likely to be bent. In addition, among the first fastening part, the second fastening part, the second bent part, and the third fastening part, the second bent part has minimum stiffness. In this way, stiffness of a fourth part of the display module including the second bent part and the fourth display area is small. In this case, when the support member is in the first folded state or the second folded state, the fourth part of the display module is more likely to be bent. In addition, the stiffness of the first fastening part, the stiffness of the second fastening part, and the stiffness of the third fastening part are set to be greater than the stiffness of the first bent part and the stiffness of the second bent part, so that the stiffness of the first fastening part, the stiffness of the second fastening part, and the stiffness of the third fastening part are large, and the first fastening part, the second fastening part, and the third fastening part may respectively provide rigid support for the first display area, the third display area, and the fifth display area of the display panel. Therefore, the support member in this application may be configured to provide rigid support for the display panel, to improve support strength of the display panel. In addition, the support member can also be bent under external force while ensuring certain stiffness. In other words, the support member further has certain bendable performance.

It may be understood that, when the support member switches between the first folded state and the second folded state (that is, in the process in which the support member is unfolded or folded relatively), the first bent main part is bent in the folding direction. In this case, the first bent sub-part and the second bent sub-part of the first bent part can be disposed close to each other, so that the first bent part of the support member and the second display area of the display panel can be bent into a shape with a small volume. In this way, the first bent part of the support member may meet a bending requirement of the second display area of the display panel, so that the first bent part of the support member and the second display area of the display panel can adapt to an inward foldable mechanism.

In addition, the first bent sub-part and the second bent sub-part of the first bent part are disposed to bend away from the folding direction, so that the first bent sub-part and the second bent sub-part of the first bent part can be further disposed close to each other. In this case, the first bent part of the support member and the second display area of the display panel can be bent into a shape with a smaller volume. In this way, the first bent part of the support member may meet the bending requirement of the second display area of the display panel better, so that the first bent part of the support member and the second display area of the display panel can adapt to the inward foldable mechanism better.

In a possible implementation, the stiffness of the first fastening part, the stiffness of the second fastening part, stiffness of the first bent sub-part, and stiffness of the second bent sub-part are all greater than stiffness of the first bent main part.

It may be understood that, among the first bent sub-part, the first bent main part, and the second bent sub-part of the first bent part, the first bent main part has minimum stiffness, so that the first bent main part has a better bending capability. In other words, the first bent main part can be bent more greatly when the support member is in the second folded state. In this case, the first bent sub-part and the second bent sub-part of the first bent part can be disposed close to each other to a larger extent. The first bent part of the support member and the second display area of the display panel can be bent into a shape with a smaller volume. In this way, the first bent part of the support member may meet the bending requirement of the second display area of the display panel better, so that the first bent part of the support member and the second display area of the display panel can adapt to the accommodation space of the inward foldable mechanism better.

In addition, in this implementation, both the stiffness of the first bent sub-part and the stiffness of the second bent sub-part are set to be greater than the stiffness of the first bent main part, so that both the first bent sub-part and the second bent sub-part of the first bent part have a specific bending capability. In this case, both the first bent sub-part and the second bent sub-part of the first bent part are bent away from the folding direction. The first bent sub-part and the second bent sub-part of the first bent part can be further disposed close to each other, and the first connection part and the second connection part of the first bent part can be further disposed close to each other. In this case, the first bent part of the support member and the second display area of the display panel can be bent into a shape with a smaller volume. In this way, the first bent part of the support member may meet the bending requirement of the second display area of the display panel better, so that the first bent part of the support member and the second display area of the display panel can adapt to the accommodation space of the inward foldable mechanism better.

In a possible implementation, a thickness of the first fastening part, a thickness of the second fastening part, a thickness of the first bent sub-part, and a thickness of the second bent sub-part are greater than a thickness of the first bent main part. In this way, the stiffness of the first fastening part, the stiffness of the second fastening part, the stiffness of the first bent sub-part, and the stiffness of the second bent sub-part may be all greater than the stiffness of the first bent main part. In a possible implementation, a weight per unit volume of the first fastening part, a weight per unit volume of the second fastening part, a weight per unit volume of the first bent sub-part, and a weight per unit volume of the second bent sub-part are greater than a weight per unit volume of the first bent main part. In this way, the stiffness of the first fastening part, the stiffness of the second fastening part, the stiffness of the first bent sub-part, and the stiffness of the second bent sub-part may be all greater than the stiffness of the first bent main part.

In a possible implementation, in the first direction, a width of the first bent main part is greater than a width of the first bent sub-part, and the width of the first bent main part is greater than a width of the second bent sub-part. In this way, this helps reduce overall stiffness of the first bent part, so that the first bent part of the support member and the second display area of the display panel can be bent into a shape with a small volume. The first bent part of the support member may meet the bending requirement of the second display area of the display panel better, so that the first bent part of the support member and the second display area of the display panel can adapt to the inward foldable mechanism better.

In a possible implementation, the first bent main part is provided with a plurality of rows of through holes, and the through hole penetrates two plate surfaces of the support member. This helps reduce overall stiffness of the first bent main part to a large extent.

In a possible implementation, the through hole extends in a second direction, and the second direction is parallel to the plate surface of the support member, and is perpendicular to the first direction. This helps reduce overall stiffness of the first bent main part to a large extent.

In a possible implementation, the through hole is bar-shaped. This helps reduce overall stiffness of the first bent main part to a large extent.

In a possible implementation, a first row of through holes of the plurality of rows of through holes penetrate a first side edge of the first bent main part in the second direction; and/or a last row of through holes of the plurality of rows of through holes penetrate a second side edge of the first bent main part in the second direction, where the second direction is parallel to the plate surface of the support member, and is perpendicular to the first direction. This helps reduce stiffness of the first side edge of the first bent main part and/or the second side edge of the first bent main part to a large extent, so that bending performance of the first bent main part is improved, and overall stiffness of the first bent main part is further reduced to a large extent.

In a possible implementation, the first bent sub-part and the second bent sub-part are symmetrically disposed with respect to the first bent main part.

In a possible implementation, the first bent sub-part is provided with a plurality of rows of first through holes, and the first through hole penetrates two plate surfaces of the support member. This helps reduce overall stiffness of the first bent sub-part.

In a possible implementation, the first through hole extends in a second direction, and the second direction is parallel to the plate surface of the support member, and is perpendicular to the first direction.

In a possible implementation, the first through hole is bar-shaped.

In a possible implementation, the first bent part further includes a first connection part and a second connection part, the first connection part is located between the first bent sub-part and the first bent main part, and the second connection part is located between the second bent sub-part and the first bent main part.

Stiffness of the first connection part and stiffness of the second connection part are greater than the stiffness of the first bent sub-part, the stiffness of the first bent main part, and the stiffness of the second bent sub-part; and in the process in which the first fastening part and the second fastening part are unfolded or folded relative to each other, the first bent sub-part, the first connection part, the first bent main part, the second connection part, and the second bent sub-part jointly form the accommodation space.

It may be understood that the stiffness of the first connection part and the stiffness of the second connection part are set to be greater than the stiffness of the first bent sub-part, the stiffness of the first bent main part, and the stiffness of the second bent sub-part, to ensure that the first bent part has specific stiffness as a whole, so as to provide rigid support for the second display area of the display panel.

In a possible implementation, the first connection part and the second connection part are complete plate-like structures. This helps ensure that the first connection part and the second connection part have certain stiffness.

In a possible implementation, in a second direction, a second through hole or a second groove is provided on at least one side edge of the first connection part, where the second direction is parallel to a plate surface of the support member, and is perpendicular to the first direction.

It may be understood that the second through hole or the second groove is provided on at least one side edge of the first connection part, to reduce stiffness of the first connection part. In other words, the first connection part has specific flexibility. In this case, the stiffness of the first connection part may provide a transitional function between the stiffness of the first bent sub-part and the stiffness of the first bent main part. In other words, stiffness of a connection area between the first bent sub-part and the first bent main part is not high. The stiffness of the first bent sub-part, the stiffness of the first connection part, and the stiffness of the first bent main part are continuous. In this way, when the electronic device is impacted due to falling, a bump with a large bending amplitude is unlikely to be generated on a side edge of the first connection part, to ensure that the first connection part can be restored after impact, that is, the first connection part is unlikely to be damaged. In other words, when the electronic device is impacted due to falling, the support member is unlikely to be folded.

In a possible implementation, the second through holes or the second grooves are spaced away from each other on a side edge of the first connection part, in other words, a second through hole group of the first connection part does not penetrate the side edge of the first connection part. In this way, the stiffness of the first connection part is unlikely to be reduced to a large extent. The stiffness of the first connection part may provide a gently transitional function between the stiffness of the first bent sub-part and the stiffness of the first bent main part. In other words, stiffness of a connection area between the first bent sub-part and the first bent main part is not low. In this case, the stiffness of the first bent sub-part, the stiffness of the first connection part, and the stiffness of the first bent main part are more continuous. In this way, when the electronic device is impacted due to falling, a bump with a large bending amplitude is more unlikely to be generated on a side edge of the first connection part, to ensure that the first connection part can be restored after impact, that is, the first connection part is unlikely to be damaged. In other words, when the electronic device is impacted due to falling, the support member is unlikely to be folded.

In a possible implementation, a thickness of the first connection part and a thickness of the second connection part are greater than a thickness of the first bent sub-part, a thickness of the first bent main part, and a thickness of the second bent sub-part; or a weight per volume of the first connection part and a weight per volume of the second connection part are greater than the weight per volume of the first bent sub-part, the weight per volume of the first bent main part, and the weight per volume of the second bent sub-part. In this way, the stiffness of the first connection part and the stiffness of the second connection part may be greater than the stiffness of the first bent sub-part, the stiffness of the first bent main part, and the stiffness of the second bent sub-part.

In a possible implementation, the support member is provided with a first recessed area, the first recessed area forms an opening on a side edge of the first bent sub-part and/or a side edge of the first connection part and/or a side edge of the first bent main part and/or a side edge of the second connection part and/or a side edge of the second bent sub-part, and the first recessed area is used to dispose a portion of an end part of the first foldable mechanism.

It may be understood that the first recessed area is disposed on the portion of the end part of the first foldable mechanism, so that the first foldable mechanism may use a space of the support member in a Y-axis direction, that is, the first foldable mechanism and the support member have an overlapping area in the Y-axis direction. This helps reduce a black-edge area of the electronic device, that is, helps the electronic device implement a narrow bezel design.

In a possible implementation, the second bent part is provided with a plurality of rows of penetrating hole groups, the plurality of rows of penetrating hole groups are spaced away from each other in a second direction, the penetrating hole group includes a plurality of penetrating holes that are spaced away from each other, the plurality of penetrating holes are arranged in the first direction, the penetrating hole penetrates two plate surfaces of the support member, and the second direction is parallel to the plate surface of the support member, and is perpendicular to the first direction. This helps reduce overall stiffness of the second bent part to a large extent.

In a possible implementation, the penetrating hole is bar-shaped, and the penetrating hole extends in the second direction. This helps reduce overall stiffness of the second bent part to a large extent. In a possible implementation, the plurality of rows of penetrating hole groups include a first-row penetrating hole group, and the first-row penetrating hole group is close to a first side edge of the second bent part; and the first-row penetrating hole group includes first-type penetrating holes and second-type penetrating holes, the second-type penetrating holes are located on two sides of the first-type penetrating hole, the first-type penetrating hole further penetrates the first side edge, and the second-type penetrating holes are spaced away from each other on the first side edge.

It may be understood that the first-type penetrating hole is disposed to penetrate the first side edge of the second bent part, so that stiffness of a middle part of the first side edge of the second bent part is small, that is, the middle part of the first side edge of the second bent part is more likely to be bent. In addition, the second-type penetrating hole is disposed to not penetrate the first side edge of the second bent part, so that stiffness at two ends of the first side edge of the second bent part is not small. In this way, when the electronic device is impacted due to falling, a bump with a large bending amplitude is unlikely to be generated at two ends of the first side edge of the second bent part, to ensure that the second bent part can be restored after impact, that is, the second bent part is unlikely to be damaged. In other words, when the electronic device is impacted due to falling, the support member is unlikely to be folded.

In a possible implementation, the second bent part is provided with a second recessed area, the second recessed area forms an opening on a first side edge or a second side edge of the second bent part, and a portion of an end part of the second foldable mechanism is located in the second recessed area. In this way, the second foldable mechanism may use a space of the support member in the Y-axis direction, that is, the second foldable mechanism and the support member have an overlapping area in the Y-axis direction. This helps reduce a black-edge area of the electronic device, that is, helps the electronic device implement a narrow bezel design.

According to a third aspect, this application provides a support member. The support member includes a first fastening part, a first bent part, a second fastening part, a second bent part, and a third fastening part that are sequentially disposed in a first direction, where stiffness of the first fastening part, stiffness of the second fastening part, and stiffness of the third fastening part are greater than stiffness of the first bent part and stiffness of the second bent part, and the first direction is a direction from the first fastening part to the third fastening part when the support member is in an unfolded state.

In a process in which the first fastening part and the second fastening part are unfolded or folded relative to each other, the first bent part is bent; and in a process in which the second fastening part and the third fastening part are unfolded or folded relative to each other, the second bent part is bent.

When the support member is in the unfolded state, the first fastening part, the first bent part, the second fastening part, the second bent part, and the third fastening part form a plate-like structure. When the support member is in a first folded state, the first fastening part, the first bent part, and the second fastening part form a plate-like structure, the second bent part is bent, and the third fastening part and the second fastening part are stacked.

When the support member is in a second folded state, the first bent part and the second bent part are bent, and the first fastening part, the second fastening part, and the third fastening part are stacked.

The first bent part includes a first bent sub-part, a first bent main part, and a second bent sub-part that are sequentially arranged in the first direction.

In the process in which the first fastening part and the second fastening part are unfolded or folded relative to each other, the first bent main part is bent in a folding direction, the first bent sub-part and the second bent sub-part are bent away from the folding direction, the first bent sub-part, the first bent main part, and the second bent sub-part form an accommodation space, and the accommodation space is used to dispose at least a portion of the second display area.

It may be understood that the first bent part has minimum stiffness when being disposed in the first fastening part, the first bent part, the second fastening part, and the third fastening part. In this way, stiffness of a second part of the display module including the first bent part and the second display area is small. In this case, when the support member is in a second folded state, the second part of the display module is more likely to be bent. In addition, among the first fastening part, the second fastening part, the second bent part, and the third fastening part, the second bent part has minimum stiffness. In this way, stiffness of a fourth part of a display module including the second bent part and the fourth display area is small. In this case, when the support member is in the first folded state or the second folded state, the fourth part of the display module is more likely to be bent. In addition, the stiffness of the first fastening part, the stiffness of the second fastening part, and the stiffness of the third fastening part are set to be greater than the stiffness of the first bent part and the stiffness of the second bent part, so that the stiffness of the first fastening part, the stiffness of the second fastening part, and the stiffness of the third fastening part are large, and the first fastening part, the second fastening part, and the third fastening part may be configured to respectively provide rigid support for the first display area, the third display area, and the fifth display area of the display panel. Therefore, the support member in this application may be configured to provide rigid support for the display panel, to improve support strength of the display panel. In addition, the support member can also be bent under external force while ensuring certain stiffness. In other words, the support member further has certain bendable performance.

It may be understood that, when the support member switches between the first folded state and the second folded state (that is, in the process in which the support member is unfolded or folded relatively), the first bent main part is bent in the folding direction. In this case, the first bent sub-part and the second bent sub-part of the first bent part can be disposed close to each other, so that the first bent part of the support member can be bent into a shape with a small volume. In this way, the first bent part of the support member may be configured to meet a bending requirement of the second display area of the display panel, so that the first bent part of the support member and the second display area of the display panel can adapt to an inward foldable mechanism.

In addition, the first bent sub-part and the second bent sub-part of the first bent part are disposed to bend away from the folding direction, so that the first bent sub-part and the second bent sub-part of the first bent part can be further disposed close to each other. In this case, the first bent part of the support member can be bent into a shape with a smaller volume. In this way, the first bent part of the support member may be configured to meet the bending requirement of the second display area of the display panel better, so that the first bent part of the support member and the second display area of the display panel can adapt to the inward foldable mechanism better.

In a possible implementation, stiffness of the first fastening part, the stiffness of the second fastening part, the stiffness of the first bent sub-part, and stiffness of the second bent sub-part are all greater than stiffness of the first bent main part.

It may be understood that, among the first bent sub-part, the first bent main part, and the second bent sub-part of the first bent part, the first bent main part has minimum stiffness, so that the first bent main part has a better bending capability. In other words, the first bent main part can be bent more greatly when the support member is in the second folded state. In this case, the first bent sub-part and the second bent sub-part of the first bent part can be disposed close to each other to a larger extent. The first bent part of the support member may be bent into a shape with a small volume. In this way, the first bent part of the support member may be configured to meet the bending requirement of the second display area of the display panel better, so that the first bent part of the support member and the second display area of the display panel can adapt to the accommodation space of the inward foldable mechanism better.

In addition, in this implementation, both the stiffness of the first bent sub-part and the stiffness of the second bent sub-part are set to be greater than the stiffness of the first bent main part, so that both the first bent sub-part and the second bent sub-part of the first bent part have a specific bending capability. In this case, both the first bent sub-part and the second bent sub-part of the first bent part are bent away from the folding direction. The first bent sub-part and the second bent sub-part of the first bent part can be further disposed close to each other, and the first connection part and the second connection part of the first bent part can be further disposed close to each other. In this case, the first bent part of the support member can be bent into a shape with a smaller volume. In this way, the first bent part of the support member may meet the bending requirement of the second display area of the display panel better, so that the first bent part of the support member and the second display area of the display panel can adapt to the accommodation space of the inward foldable mechanism better.

In a possible implementation, a thickness of the first fastening part, a thickness of the second fastening part, a thickness of the first bent sub-part, and a thickness of the second bent sub-part are greater than a thickness of the first bent main part. In this way, the stiffness of the first fastening part, the stiffness of the second fastening part, the stiffness of the first bent sub-part, and the stiffness of the second bent sub-part may be all greater than the stiffness of the first bent main part. In a possible implementation, a weight per unit volume of the first fastening part, a weight per unit volume of the second fastening part, a weight per unit volume of the first bent sub-part, and a weight per unit volume of the second bent sub-part are greater than a weight per unit volume of the first bent main part. In this way, the stiffness of the first fastening part, the stiffness of the second fastening part, the stiffness of the first bent sub-part, and the stiffness of the second bent sub-part may be all greater than the stiffness of the first bent main part.

In a possible implementation, in the first direction, a width of the first bent main part is greater than a width of the first bent sub-part, and the width of the first bent main part is greater than a width of the second bent sub-part. In this way, this helps reduce overall stiffness of the first bent part, so that the first bent part of the support member can be bent into a shape with a small volume. The first bent part of the support member may be configured to meet the bending requirement of the second display area of the display panel better, so that the first bent part of the support member and the second display area of the display panel can adapt to the inward foldable mechanism better. In a possible implementation, the first bent main part is provided with a plurality of rows of through holes, and the through hole penetrates two plate surfaces of the support member. This helps reduce overall stiffness of the first bent main part to a large extent.

In a possible implementation, the through hole extends in a second direction, and the second direction is parallel to the plate surface of the support member, and is perpendicular to the first direction. This helps reduce overall stiffness of the first bent main part to a large extent.

In a possible implementation, the through hole is bar-shaped. This helps reduce overall stiffness of the first bent main part to a large extent.

In a possible implementation, a first row of through holes of the plurality of rows of through holes penetrate a first side edge of the first bent main part in the second direction; and/or a last row of through holes of the plurality of rows of through holes penetrate a second side edge of the first bent main part in the second direction, where the second direction is parallel to the plate surface of the support member, and is perpendicular to the first direction. This helps reduce stiffness of the first side edge of the first bent main part and/or the second side edge of the first bent main part to a large extent, so that bending performance of the first bent main part is improved, and overall stiffness of the first bent main part is further reduced to a large extent.

In a possible implementation, the first bent sub-part and the second bent sub-part are symmetrically disposed with respect to the first bent main part.

In a possible implementation, the first bent sub-part is provided with a plurality of rows of first through holes, and the first through hole penetrates two plate surfaces of the support member. This helps reduce overall stiffness of the first bent sub-part.

In a possible implementation, the first through hole extends in a second direction, and the second direction is parallel to the plate surface of the support member, and is perpendicular to the first direction.

In a possible implementation, the first through hole is bar-shaped.

In a possible implementation, the first bent part further includes a first connection part and a second connection part, the first connection part is located between the first bent sub-part and the first bent main part, and the second connection part is located between the second bent sub-part and the first bent main part.

Stiffness of the first connection part and stiffness of the second connection part are greater than the stiffness of the first bent sub-part, the stiffness of the first bent main part, and the stiffness of the second bent sub-part; and in the process in which the first fastening part and the second fastening part are unfolded or folded relative to each other, the first bent sub-part, the first connection part, the first bent main part, the second connection part, and the second bent sub-part jointly form the accommodation space.

It may be understood that the stiffness of the first connection part and the stiffness of the second connection part are set to be greater than the stiffness of the first bent sub-part, the stiffness of the first bent main part, and the stiffness of the second bent sub-part, to ensure that the first bent part has specific stiffness as a whole, so as to provide rigid support for the second display area of the display panel.

In a possible implementation, the first connection part and the second connection part are complete plate-like structures. This helps ensure that the first connection part and the second connection part have certain stiffness.

In a possible implementation, in a second direction, a second through hole or a second groove is provided on at least one side edge of the first connection part, where the second direction is parallel to a plate surface of the support member, and is perpendicular to the first direction.

It may be understood that the second through hole or the second groove is provided on at least one side edge of the first connection part, to reduce stiffness of the first connection part. In other words, the first connection part has specific flexibility. In this case, the stiffness of the first connection part may provide a transitional function between the stiffness of the first bent sub-part and the stiffness of the first bent main part. In other words, stiffness of a connection area between the first bent sub-part and the first bent main part is not high. The stiffness of the first bent sub-part, the stiffness of the first connection part, and the stiffness of the first bent main part are continuous. In this way, when the electronic device is impacted due to falling, a bump with a large bending amplitude is unlikely to be generated on a side edge of the first connection part, to ensure that the first connection part can be restored after impact, that is, the first connection part is unlikely to be damaged. In other words, when the electronic device is impacted due to falling, the support member is unlikely to be folded.

In a possible implementation, the second through holes or the second grooves are spaced away from each other on a side edge of the first connection part, in other words, a second through hole group of the first connection part does not penetrate the side edge of the first connection part. In this way, the stiffness of the first connection part is unlikely to be reduced to a large extent. The stiffness of the first connection part may provide a gently transitional function between the stiffness of the first bent sub-part and the stiffness of the first bent main part. In other words, stiffness of a connection area between the first bent sub-part and the first bent main part is not low. In this case, the stiffness of the first bent sub-part, the stiffness of the first connection part, and the stiffness of the first bent main part are more continuous. In this way, when the electronic device is impacted due to falling, a bump with a large bending amplitude is more unlikely to be generated on a side edge of the first connection part, to ensure that the first connection part can be restored after impact, that is, the first connection part is unlikely to be damaged. In other words, when the electronic device is impacted due to falling, the support member is unlikely to be folded.

In a possible implementation, a thickness of the first connection part and a thickness of the second connection part are greater than a thickness of the first bent sub-part, a thickness of the first bent main part, and a thickness of the second bent sub-part; or a weight per volume of the first connection part and a weight per volume of the second connection part are greater than the weight per volume of the first bent sub-part, the weight per volume of the first bent main part, and the weight per volume of the second bent sub-part. In this way, the stiffness of the first connection part and the stiffness of the second connection part may be greater than the stiffness of the first bent sub-part, the stiffness of the first bent main part, and the stiffness of the second bent sub-part.

In a possible implementation, the support member is provided with a first recessed area, the first recessed area forms an opening on a side edge of the first bent sub-part and/or a side edge of the first connection part and/or a side edge of the first bent main part and/or a side edge of the second connection part and/or a side edge of the second bent sub-part, and the first recessed area is used to dispose a portion of an end part of the first foldable mechanism.

It may be understood that the first recessed area is disposed on the portion of the end part of the first foldable mechanism, so that the first foldable mechanism may use a space of the support member in a Y-axis direction, that is, the first foldable mechanism and the support member have an overlapping area in the Y-axis direction. This helps reduce a black-edge area of the electronic device, that is, helps the electronic device implement a narrow bezel design.

In a possible implementation, the second bent part is provided with a plurality of rows of penetrating hole groups, the plurality of rows of penetrating hole groups are spaced away from each other in a second direction, the penetrating hole group includes a plurality of penetrating holes that are spaced away from each other, the plurality of penetrating holes are arranged in the first direction, the penetrating hole penetrates two plate surfaces of the support member, and the second direction is parallel to the plate surface of the support member, and is perpendicular to the first direction. This helps reduce overall stiffness of the second bent part to a large extent.

In a possible implementation, the penetrating hole is bar-shaped, and the penetrating hole extends in the second direction. This helps reduce overall stiffness of the second bent part to a large extent. In a possible implementation, the plurality of rows of penetrating hole groups include a first-row penetrating hole group, and the first-row penetrating hole group is close to a first side edge of the second bent part; and the first-row penetrating hole group includes first-type penetrating holes and second-type penetrating holes, the second-type penetrating holes are located on two sides of the first-type penetrating hole, the first-type penetrating hole further penetrates the first side edge, and the second-type penetrating holes are spaced away from each other on the first side edge.

It may be understood that the first-type penetrating hole is disposed to penetrate the first side edge of the second bent part, so that stiffness of a middle part of the first side edge of the second bent part is small, that is, the middle part of the first side edge of the second bent part is more likely to be bent. In addition, the second-type penetrating hole is disposed to not penetrate the first side edge of the second bent part, so that stiffness at two ends of the first side edge of the second bent part is not small. In this way, when the electronic device is impacted due to falling, a bump with a large bending amplitude is unlikely to be generated at two ends of the first side edge of the second bent part, to ensure that the second bent part can be restored after impact, that is, the second bent part is unlikely to be damaged. In other words, when the electronic device is impacted due to falling, the support member is unlikely to be folded.

In a possible implementation, the second bent part is provided with a second recessed area, the second recessed area forms an opening on a first side edge or a second side edge of the second bent part, and a portion of an end part of the second foldable mechanism is located in the second recessed area. In this way, the second foldable mechanism may use a space of the support member in the Y-axis direction, that is, the second foldable mechanism and the support member have an overlapping area in the Y-axis direction. This helps reduce a black-edge area of the electronic device, that is, helps the electronic device implement a narrow bezel design.

### BRIEF DESCRIPTION OF DRAWINGS

To describe the technical solutions in embodiments of this application, the following describes the accompanying drawings used in embodiments of this application.
FIG. 1 is a diagram of a structure of an electronic device in an unfolded state according to an embodiment of this application;
FIG. 2 is a diagram of a structure of the electronic device shown in FIG. 1 in a first folded state according to an implementation;
FIG. 3 is a diagram of a structure of the electronic device shown in FIG. 1 in a second folded state according to an implementation;
FIG. 4 is a partial exploded view of the electronic device shown in FIG. 1 according to an implementation;
FIG. 5 is a partial sectional view of the electronic device shown in FIG. 3 at an A-A line according to an implementation;
FIG. 6 is a partial exploded view of a display module shown in FIG. 4 according to an implementation;
FIG. 7 is a partial exploded view of a display module shown in FIG. 2 according to an implementation;
FIG. 8 is a partial exploded view of a display module shown in FIG. 5 according to an implementation;
FIG. 9 is a diagram of a structure of a display module shown in FIG. 5 according to an implementation;
FIG. 10 is an enlarged view of a support member shown in FIG. 6 at M1 according to an implementation;
FIG. 11 is an enlarged view of a support member shown in FIG. 8 at M2 according to an implementation;
FIG. 12 is an enlarged view of the support member shown in FIG. 10 at M3 according to an implementation;
FIG. 13 is a partial sectional view of the electronic device shown in FIG. 1 at a B-B line according to an implementation;
FIG. 14A is a partial enlarged view of the electronic device shown in FIG. 5 at M4 according to an implementation;
FIG. 14B is a diagram of a position relationship between the support member shown in FIG. 10 and a first housing, a second housing, and a first foldable mechanism;
FIG. 15 is an enlarged view of a support member shown in FIG. 6 at M5 according to an implementation;
FIG. 16 is an enlarged view of a support member shown in FIG. 8 at M6 according to an implementation;
FIG. 17 is a diagram of a position relationship between the support member shown in FIG. 15 and a second housing, a third housing, and a second foldable mechanism;
FIG. 18 is a diagram of a structure of the electronic device shown in FIG. 1 in a second folded state according to another implementation;
FIG. 19 is a partial exploded view of a display module shown in FIG. 14A according to an implementation; and
FIG. 20 is a diagram of a structure of the electronic device shown in FIG. 1 in a second folded state according to another implementation.

### DESCRIPTION OF EMBODIMENTS

In descriptions of embodiments of this application, it should be noted that, unless otherwise specified or limited expressly, the term "connection" should be understood in a broad sense. For example, the term "connection" may be a detachable connection or a nondetachable connection, or may be a direct connection or an indirect connection by using an intermediate medium. "Fastened" may be a connection to each other and a relative position relationship unchanged after the connection. A "rotatable connection" may be a connection to each other and a relative rotation after the connection. A "slidable connection" may be a connection to each other and a relative slide after the connection. Orientation terms mentioned in embodiments of this application, for example, "up", "down", "inside", and "outside", are merely directions with reference to the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application. In the following descriptions, terms such as "first" and "second" are used only for description purposes, and cannot be understood as implying or implying relative importance or implicitly indicating a quantity of indicated technical features. Therefore, a feature limited by "first" or "second" may explicitly or implicitly include one or more features. In addition, "a plurality of" means "at least two". The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In addition, in embodiments of this application, a mathematical concept such as parallel, vertical, and the like is mentioned. These limitations are all for the current process level, but not for an absolute strict definition in the mathematical sense. A small deviation is allowed, which can be approximately parallel or vertical. For example, that A is parallel to B means that A is parallel or approximately parallel to B, and an included angle of 0 degrees to 10 degrees between A and B is allowed. For example, that A is vertical to B means that A is vertical or approximately vertical to B, and an included angle of 80 degrees to 100 degrees between A and B is allowed.

The following describes embodiments of this application with reference to the accompanying drawings in embodiments of this application.

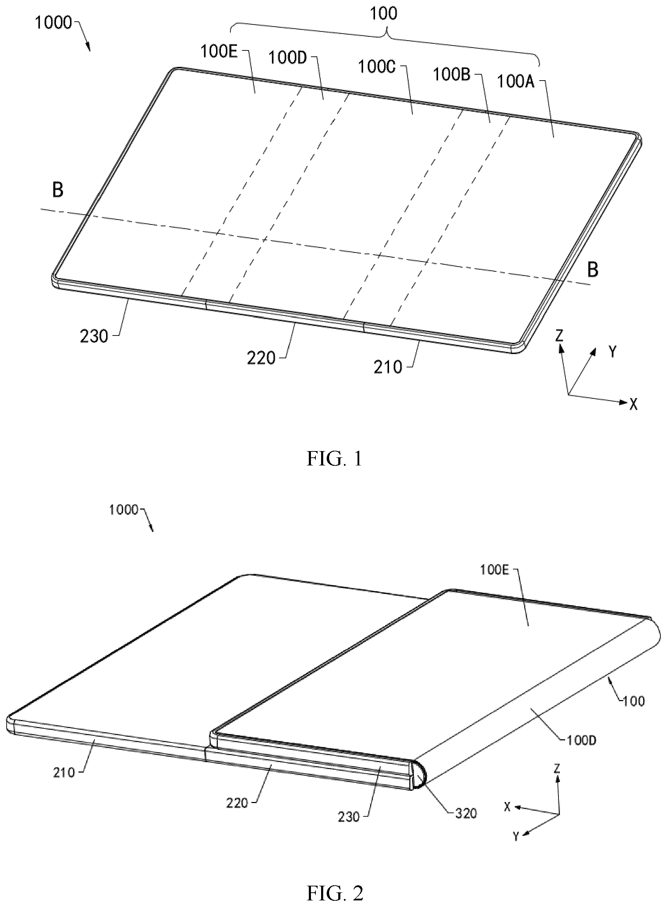

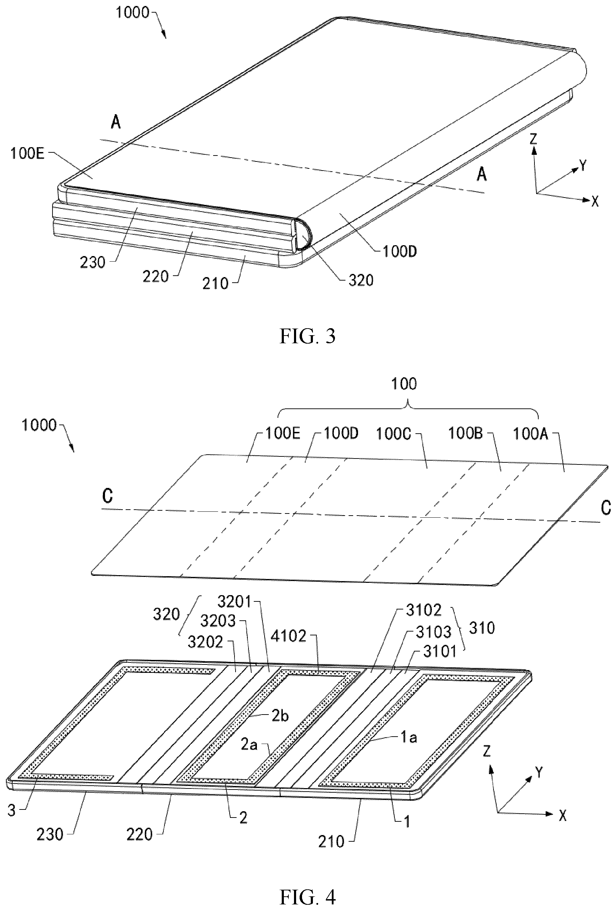

FIG. 1 is a diagram of a structure of an electronic device 1000 in an unfolded state according to an embodiment of this application. FIG. 2 is a diagram of a structure of the electronic device 1000 shown in FIG. 1 in a first folded state according to an implementation. FIG. 3 is a diagram of a structure of the electronic device 1000 shown in FIG. 1 in a second folded state according to an implementation.

As shown in FIG. 1 to FIG. 3, this application provides the electronic device 1000 that can be folded more than once. The electronic device 1000 may be a foldable device like a mobile phone, a tablet computer, a personal computer, a notebook computer, a vehicle-mounted device, or a wearable device. The electronic device 1000 in the embodiment shown in FIG. 1 is described by using the mobile phone as an example. For ease of description, for example, a thickness direction of the electronic device 1000 is defined as a Z-axis direction, and an extension direction of a rotation axis of the electronic device 1000 is defined as a Y-axis direction, that is, a width direction of the electronic device 1000 is defined as the Y-axis direction. A direction perpendicular to the Y-axis direction and the Z-axis direction is an X-axis direction, that is, a length direction of the electronic device 1000 is an X-axis. For example, the X-axis direction is defined as a first direction, and the Y-axis direction is defined as a second direction. In another implementation, the first direction and the second direction may alternatively be flexibly set according to a requirement, provided that the first direction is different from the second direction.

It may be understood that a coordinate system of the electronic device 1000 may alternatively be flexibly set based on a specific requirement. In this implementation, when the direction of the rotation axis of the electronic device 1000 is the Y-axis direction, the electronic device 1000 may be unfolded or folded in the Y-axis direction. In this way, when the electronic device 1000 is in a second folded state, a size of the electronic device 1000 in the X-axis direction is decreased.

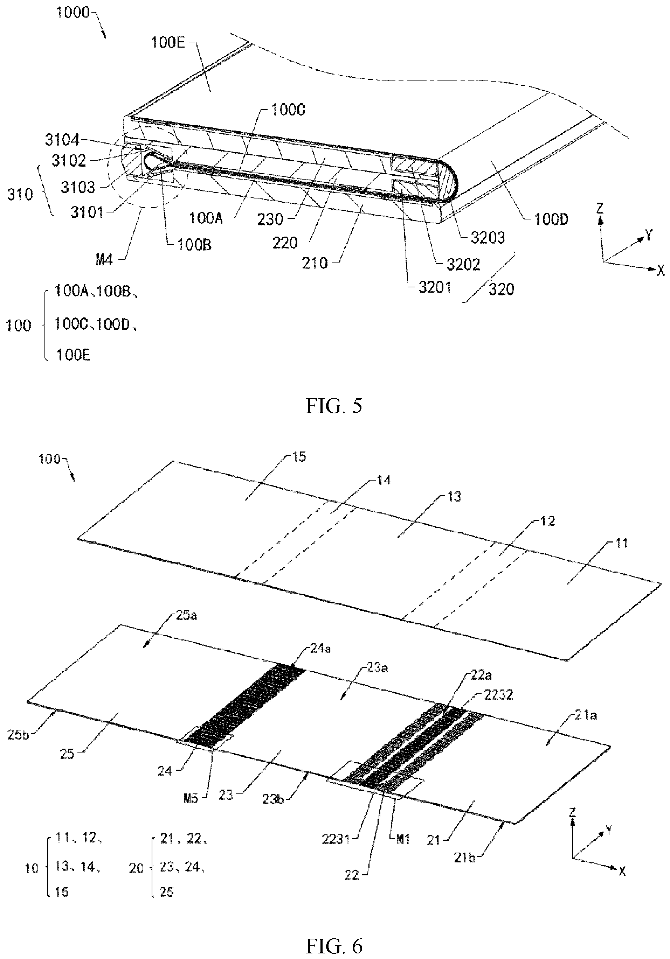

FIG. 4 is a partial exploded view of the electronic device 1000 shown in FIG. 1 according to an implementation. FIG. 5 is a partial sectional view of the electronic device shown in FIG. 3 at an A-A line according to an implementation.

Refer to FIG. 4 and FIG. 5. With reference to FIG. 1 to FIG. 3, the electronic device 1000 includes a display module 100, a first housing 210, a second housing 220, a third housing 230, a first foldable mechanism 310, and a second foldable mechanism 320. The first foldable mechanism 310 is connected to the first housing 210 and the second housing 220. The first foldable mechanism 310 is configured to unfold or fold the first housing 210 and the second housing 220 relative to each other. The second foldable mechanism 320 is connected to the second housing 220 and the third housing 230. The second foldable mechanism 320 is configured to unfold or fold the second housing 220 and the third housing 230 relative to each other. It may be understood that, in this application, the first foldable mechanism 310 and the second foldable mechanism 320 are disposed in the electronic device 1000, so that the electronic device 1000 may be folded a plurality of times. The first foldable mechanism 310 may be an inward foldable mechanism. The second foldable mechanism 320 may be an outward foldable mechanism. The inward foldable mechanism 310 is a foldable mechanism that can fold at least a portion of the display module 100 between the two housings. The outward foldable mechanism 320 is a foldable mechanism that can fold at least a portion of the display module 100 to the outside of the housing. In another implementation, the first foldable mechanism 310 may alternatively be an outward foldable mechanism. The second foldable mechanism 320 may alternatively be an inward foldable mechanism. This is not specifically limited in this application.

In this implementation, an example in which the first foldable mechanism 310 is an inward foldable mechanism and the second foldable mechanism 320 is an outward foldable mechanism is used for description. For ease of reading and understanding, the following first foldable mechanism 310 is described by using an inward foldable mechanism, and the following second foldable mechanism 320 is described by using an outward foldable mechanism. A reference numeral of the inward foldable mechanism is a reference numeral of the first foldable mechanism 310. A reference numeral of the outward foldable mechanism is a reference numeral of the second foldable mechanism 320.

Refer to FIG. 4. With reference to FIG. 1, when the first housing 210, the second housing 220, the third housing 230, the inward foldable mechanism 310, and the outward foldable mechanism 320 are unfolded relative to each other to an unfolded state, the electronic device 1000 is in the unfolded state. For example, when the electronic device 1000 is in the unfolded state, the first housing 210, the second housing 220, the third housing 230, the inward foldable mechanism 310, and the outward foldable mechanism 320 may be arranged in an X-axis direction, and may be approximately at 180° (a slight deviation, for example, 165°, 177°, or 185°, is allowed).

Refer to FIG. 2. With reference to FIG. 4, when the first housing 210, the second housing 220, the third housing 230, the inward foldable mechanism 310, and the outward foldable mechanism 320 are folded relative to each other to a first folded state, the electronic device 1000 is in the first folded state. For example, when the electronic device 1000 is in the first folded state, the first housing 210, the second housing 220, and the inward foldable mechanism 310 may be arranged in the X-axis direction, and may be approximately at 180° (a slight deviation, for example, 165°, 177°, or 185°, is allowed). The second housing 220 and the third housing 230 may be close to each other, and the second housing 220 and the third housing 230 are stacked in a thickness direction of the electronic device 1000.

Refer to FIG. 5. With reference to FIG. 3, when the first housing 210, the second housing 220, the third housing 230, the inward foldable mechanism 310, and the outward foldable mechanism 320 are folded relative to each other to a second folded state, the electronic device 1000 is in the second folded state. For example, when the electronic device 1000 is in the second folded state, the first housing 210 and the second housing 220 may be close to each other, and the first housing 210 and the second housing 220 are stacked in the thickness direction of the electronic device 1000. The second housing 220 and the third housing 230 may be close to each other, the second housing 220 and the third housing 230 are stacked in the thickness direction of the electronic device 1000, and the second housing 220 is stacked between the first housing 210 and the third housing 230. In this case, the first housing 210, the second housing 220, and the third housing 230 may be arranged in the Z-axis direction. When the first housing 210 and the second housing 220 are switched from the first folded state to the second folded state, the inward foldable mechanism 310 may enclose an accommodation space 3104. It may be understood that inward foldable mechanisms 310 of different structures have accommodation spaces 3104 of different shapes. Specific structures of the inward foldable mechanism 310 and the outward foldable mechanism 320 are not limited in this application.

Refer to FIG. 4 and FIG. 5. With reference to FIG. 1 to FIG. 3, the display module 100 includes a first part 100A, a second part 100B, a third part 100C, a fourth part 100D, and a fifth part 100E that are sequentially connected to each other. The second part 100B is connected between the first part 100A and the third part 100C. The third part 100C is connected between the second part 100B and the fourth part 100D. The fourth part 100D is connected between the third part 100C and the fifth part 100E. For example, in FIG. 1 and FIG. 4, an example in which the first part 100A, the second part 100B, the third part 100C, the fourth part 100D, and the fifth part 100E are arranged in the X-axis direction is used for illustration.

The first part 100A of the display module 100 may be fastened to the first housing 210. The third part 100C may be fastened to the second housing 220. The fifth part 100E may be fastened to the third housing 230. It may be understood that, when the first housing 210 and the second housing 220 are unfolded or folded relative to each other through the inward foldable mechanism 310, the first housing 210 may drive the first part 100A of the display module 100 to be unfolded or folded relative to the third part 100C, and the second housing 220 may drive the third part 100C of the display module 100 to be unfolded or folded relative to the first part 100A. In this case, the second part 100B of the display module 100 may be bent. When the second housing 220 and the third housing 230 are unfolded or folded relative to each other through the outward foldable mechanism 320, the second housing 220 may drive the third part 100C of the display module 100 to be unfolded or folded relative to the fifth part 100E, and the third housing 230 may drive the fifth part 100E of the display module 100 to be unfolded or folded relative to the third part 100C. In this case, the fourth part 100D of the display module 100 may be bent.

As shown in FIG. 4, in an implementation, the first part 100A of the display module 100 may be fastened to the first housing 210 through a first adhesive layer 1. The third part 100C may be fastened to the second housing 220 through a second adhesive layer 2. The fifth part 100E may be fastened to the third housing 230 through a third adhesive layer 3.

For example, the first adhesive layer 1 may be in an annular shape. In this way, when it is ensured that the first adhesive layer 1 can be fastened to the first housing 210, the first adhesive layer 1 does not occupy a large area of the first housing 210, and space utilization of the first housing 210 is high. In addition, the first adhesive layer 1 includes a first bar segment 1a. The first bar segment 1a is disposed close to the inward foldable mechanism 310. In this way, a side portion that is of the first part 100A and that is close to the second part 100B may be fastened to the first housing 210 through the first bar segment 1a. In this case, in an inward folding process of the second part 100B, the second part 100B is unlikely to be folded in a direction opposite to an inward folding direction. In another implementation, a shape of the first adhesive layer 1 is not specifically limited. For example, the second adhesive layer 2 may also be in an annular shape. In this way, when it is ensured that the second adhesive layer 2 can be fastened to the second housing 220, the second adhesive layer 2 does not occupy a large area of the second housing 220, and space utilization of the second housing 220 is high. In addition, the second adhesive layer 2 includes a second bar segment 2a. The second bar segment 2a is disposed close to the inward foldable mechanism 310. In this way, a side portion that is of the third part 100C and that is close to the second part 100B may be fastened to the second housing 220 through the second bar segment 2a. In this case, in an inward folding process of the second part 100B, the second part 100B is unlikely to be folded in a direction opposite to an inward folding direction. In another implementation, a shape of the second adhesive layer 2 is not specifically limited.

For example, the third adhesive layer 3 may be 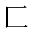 -shaped. It may be understood that the fourth part 100D of the display module 100 is an outward foldable screen. Because the bottom of the fourth part 100D is supported by the outward foldable mechanism 320, in a process of folding the fourth part 100D outward, the fourth part 100D is unlikely to be folded in a direction opposite to an outward folding direction. In this way, the third adhesive layer 3 in this implementation may omit a bar segment close to the outward foldable mechanism 320, and does not affect folding of the fourth part 100D. In addition, the second adhesive layer 2 includes a third bar segment 2b. The third bar segment 2b is disposed close to the outward foldable mechanism 320. In this way, the third bar segment 2b of the second adhesive layer 2 may fit the third adhesive layer 3, so that the fifth part 100E is fastened to the third housing 230. Compared with the annular third adhesive layer 3, the third adhesive layer 3 in this implementation may omit a bar segment close to the outward foldable mechanism 320. Therefore, the third adhesive layer 3 occupies a smaller area of the third housing 230, and space utilization of the third housing 230 is higher. In another implementation, a shape of the third adhesive layer 3 is not specifically limited.

As shown in FIG. 1 and FIG. 4, when the electronic device 1000 is in the unfolded state, the display module 100 may be in the unfolded state. For example, the first part 100A, the second part 100B, the third part 100C, the fourth part 100D, and the fifth part 100E of the display module 100 may be approximately at 180° (a slight deviation, for example, 165°, 177°, or 185°, is allowed). In this case, the display module 100 has a large continuous display area. In other words, the display module 100 can implement large-screen display, so that user experience is good.

For example, when the electronic device 1000 is in the unfolded state, at least a portion of the inward foldable mechanism 310 may be configured to support the second part 100B, and at least a portion of the outward foldable mechanism 320 may be configured to support the fourth part 100D. In this way, when the second part 100B and the fourth part 100D of the display module 100 are subject to pressing force, squeezing force, impact force, or the like, the inward foldable mechanism 310 and the outward foldable mechanism 320 may be configured to improve a pressure resistance capability and an impact resistance capability of the second part 100B and the fourth part 100D, in other words, it is ensured that the second part 100B and the fourth part 100D are not prone to a problem like a depression.

Refer to FIG. 2. With reference to FIG. 1, when the electronic device 1000 is in the first folded state, the display module 100 may be in the first folded state. The first part 100A, the second part 100B, the third part 100C, the fourth part 100D, and the fifth part 100E of the display module 100 are all located on an outer side of the electronic device 1000. In this case, the first part 100A, the second part 100B, the third part 100C, the fourth part 100D, and the fifth part 100E of the display module 100 are folded into an outer screen of the electronic device 1000. For example, the first part 100A, the second part 100B, and the third part 100C of the display module 100 may be approximately at 180° (a slight deviation, for example, 165°, 177°, or 185°, is allowed). The third part 100C and the fifth part 100E of the display module 100 are disposed close to each other. In this case, the third part 100C and the fifth part 100E of the display module 100 may be arranged in the Z-axis direction. In addition, the fourth part 100D of the display module 100 may be bent.

As shown in FIG. 3 and FIG. 5, when the electronic device 1000 is in the second folded state, the display module 100 may be in the second folded state. For example, the first part 100A and the third part 100C of the display module 100 are disposed close to each other, and the third part 100C and the fifth part 100E of the display module 100 are disposed close to each other. In this case, the first part 100A, the third part 100C, and the fifth part 100E of the display module 100 may be arranged in the Z-axis direction. In addition, the second part 100B and the fourth part 100D of the display module 100 are bent.

For example, when the electronic device 1000 is in the second folded state, the first part 100A, the second part 100B, and the third part 100C of the display module 100 are all located between the first housing 210 and the second housing 220, the second part 100B is located in the accommodation space 3104 of the inward foldable mechanism 310, both the fourth part 100D and the fifth part 100E of the display module 100 are located on the outer side of the outward foldable mechanism 320 and the third housing 230 (that is, outside the electronic device 1000), and the fifth part 100E of the display module 100 is located on a side that is of the third housing 230 and that is away from the second housing 220. When the electronic device 1000 is in the second folded state, because the first part 100A, the second part 100B, and the third part 100C of the display module 100 are all located between the first housing 210 and the second housing 220, a display surface of the first part 100A faces a display surface of the third part 100C, the second part 100B is bent and disposed between the first part 100A and the third part 100C, the second part 100B is located in the accommodation space 3104 of the inward foldable mechanism 310, and the first part 100A, the second part 100B, and the third part 100C of the display module 100 may be referred to as an inner screen of the display module 100. When the first housing 210 and the second housing 220 are folded, the first part 100A, the second part 100B, and the third part 100C are folded to a space formed by the first housing 210, the second housing 220, and the inward foldable mechanism 310, and therefore, the first part 100A, the second part 100B, and the third part 100C may also be referred to as an inner screen of the display module 100. When the second part 100B and the third part 100C are folded, at least a portion of a display surface of the fourth part 100D of the display module 100 and a display surface of the fifth part 100E are located outside the outward foldable mechanism 320 and the third housing 230, that is, outside the electronic device 1000, and therefore, the fourth part 100D and the fifth part 100E of the display module 100 may be referred to as an outer screen of the display module 100. In this case, the outward foldable mechanism 320 is configured to fold the fourth part 100D and the fifth part 100E of the display module 100 into an outer screen of the electronic device 1000.

It may be understood that, for a conventional display module, to ensure that the display module has a high pressure resistance capability and a high impact resistance capability, the display module has high stiffness. In this case, it is difficult to dispose the second part of the conventional display module in the accommodation space when the electronic device is in the second folded state. Even for some inward foldable mechanisms with complex structures, shapes of accommodation space enclosed by the inward foldable mechanisms when the electronic device is in the second folded state are even odd. In this way, it is more difficult to dispose the second part of the conventional display module in the accommodation space. In other words, it is difficult for the second part of the conventional display module to adapt to accommodation spaces of different shapes. In addition, because stiffness of the conventional display module is large, it is difficult for the fourth part of the conventional display module to be bent when the electronic device is in the second folded state. Therefore, it is difficult to apply the conventional display module in a multi-fold electronic device. However, in this application, the display module 100 that further has a good bending capability while ensuring specific stiffness is disposed, so that when the electronic device 1000 is in the second folded state, the second part 100B of the display module 100 may be disposed in the accommodation space 3104, in other words, the second part 100B of the display module 100 may adapt to the inward foldable mechanism 310. In addition, the second part 100B of the display module 100 in this application may adapt to accommodation spaces 3104 of different shapes. In addition, when the electronic device 1000 is in the second folded state, the fourth part 100D of the display module 100 can also be well bent. In other words, the fourth part 100D of the display module 100 may adapt to outward foldable mechanisms 320 of different structures. Therefore, the display module 100 in this application may be well used in the multi-fold electronic device 1000. The following specifically describes a structure of the display module 100 and a manner of disposing the display module 100 in the inward foldable mechanism 310 and the outward foldable mechanism 320 with reference to related accompanying drawings.

Refer to FIG. 4 and FIG. 5. The inward foldable mechanism 310 includes a first inward foldable plate 3101, a second inward foldable plate 3102, and a first hinge structure 3103. The first hinge structure 3103 is connected to the first inward foldable plate 3101 and the second inward foldable plate 3102. For example, the first hinge structure 3103 may be connected to the first inward foldable plate 3101 and the second inward foldable plate 3102 in a connection manner like a rotatable connection or a slidable connection. This is not specifically limited in this application. In addition, the first inward foldable plate 3101 may be further connected to the first housing 210. The second inward foldable plate 3102 may be further connected to the second housing 220. For example, the first inward foldable plate 3101 may be connected to the first housing 210 in a connection manner like a rotatable connection or a slidable connection. The second inward foldable plate 3102 may be connected to the second housing 220 in a connection manner like a rotatable connection or a slidable connection. This is not specifically limited in this application. The first hinge structure 3103 may be further connected to the first housing 210 and the second housing 220. For example, the first hinge structure 3103 may be fastened to the first housing 210 and the second housing 220. In some implementations, when the first housing 210 and the second housing 220 are in the unfolded state, the first inward foldable plate 3101 and the second inward foldable plate 3102 are spliced to form a flat support surface for the second part 100B, that is, when the first housing 210 and the second housing 220 are in the unfolded state, a gap between the first inward foldable plate 3101 and the second inward foldable plate 3102 is small, or there is almost no gap between the first inward foldable plate 3101 and the second inward foldable plate 3102, and in a direction from the first inward foldable plate 3101 to the second inward foldable plate 3102, there is no other mechanical part between the first inward foldable plate 3101 and the second inward foldable plate 3102. In some other implementations, when the first housing 210 and the second housing 220 are in the unfolded state, at least one plate is disposed between the first inward foldable plate 3101 and the second inward foldable plate 3102, and the first inward foldable plate 3101, the second inward foldable plate 3102, and the at least one plate form a flat support surface for the second part 100B.

In another implementation, a structure of the inward foldable mechanism 310 is not specifically limited. For example, although FIG. 4 and FIG. 5 show only that the inward foldable mechanism 310 includes the first inward foldable plate 3101 and the second inward foldable plate 3102, in another implementation, the inward foldable mechanism 310 may further include a third inward foldable plate, ..., and an M^{th} inward foldable plate, where M may be an integer greater than or equal to 1.

Refer to FIG. 4. When the electronic device 1000 is unfolded to the unfolded state, the first inward foldable plate 3101, the second inward foldable plate 3102, and the first hinge structure 3103 may be unfolded relative to each other. In this case, the first inward foldable plate 3101, the second inward foldable plate 3102, and the first hinge structure 3103 may jointly support the second part 100B of the display module 100. In this way, when the second part 100B of the display module 100 is subject to pressing force, squeezing force, impact force, or the like: The first inward foldable plate 3101, the second inward foldable plate 3102, and the first hinge structure 3103 may be configured to improve a pressure resistance capability and an impact resistance capability of the second part 100B, that is, ensure that the second part 100B is not prone to a problem such as a depression.

Refer to FIG. 5. When the electronic device 1000 is folded to the second folded state, the first inward foldable plate 3101 and the second inward foldable plate 3102 are close to each other, and the accommodation space 3104 is enclosed by the first inward foldable plate 3101, the second inward foldable plate 3102, and the first hinge structure 3103. The second part 100B is disposed in the accommodation space 3104. It may be understood that a cross-sectional shape of the accommodation space 3104 is not limited to a trapezoid similar to that shown in FIG. 5. In another implementation, the cross-sectional shape of the accommodation space 3104 may alternatively be an irregular shape or the like.

For example, the first inward foldable plate 3101, the second inward foldable plate 3102, and the first hinge structure 3103 are all fastened to the second part 100B of the display module 100. In this way, in a folding process of the electronic device 1000, the first inward foldable plate 3101, the second inward foldable plate 3102, and the first hinge structure 3103 all can pull the second part 100B of the display module 100 to be folded inward (that is, bent in a direction close to the first hinge structure 3103). Therefore, the second part 100B of the display module 100 is prevented from arching in a direction away from the first hinge structure 3103, that is, the second part 100B of the display module 100 is prevented from arching.

For example, in the folding process of the electronic device 1000, the first inward foldable plate 3101 and the second inward foldable plate 3102 may apply acting force to the second part 100B of the display module 100, so that the second part 100B forms a specific shape, and a volume of a space occupied by the second part 100B is reduced to a large extent. For example, the second part 100B may be in a shape of a water droplet, a baseball, or the like.

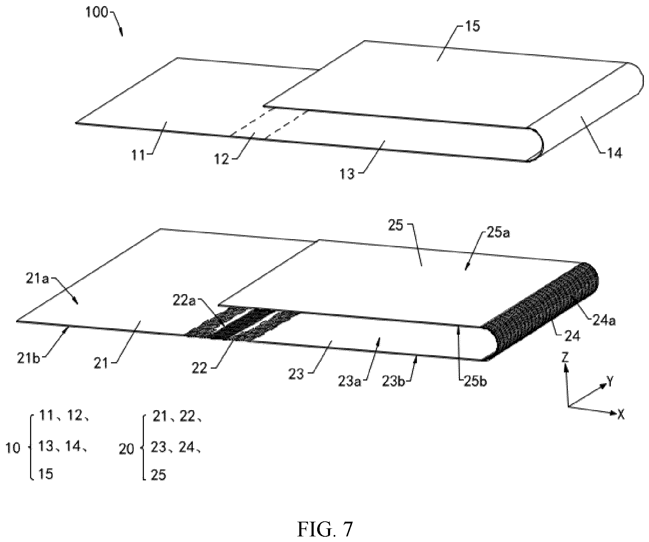

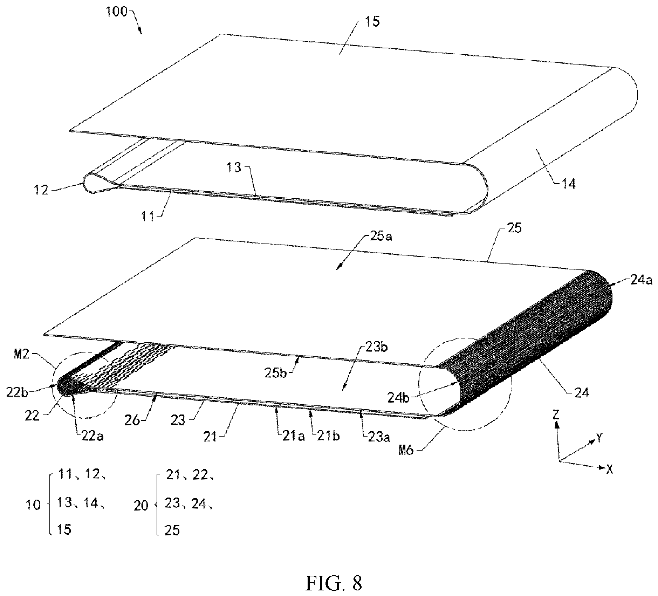

FIG. 6 is a partial exploded view of the display module 100 shown in FIG. 4 according to an implementation. FIG. 7 is a partial exploded view of the display module 100 shown in FIG. 2 according to an implementation. FIG. 8 is a partial exploded view of the display module 100 shown in FIG. 5 according to an implementation.

As shown in FIG. 6 to FIG. 8, the display module 100 includes a display panel 10 and a support member 20. The display panel 10 is configured to display an image and the like. The display panel 10 may be a flexible display panel. For example, the display panel 10 may be an organic light-emitting diode (organic light-emitting diode, OLED) display panel, an active-matrix organic light-emitting diode (active-matrix organic light-emitting diode, AMOLED) display panel, a mini light-emitting diode (mini organic light-emitting diode) display panel, a micro organic light-emitting diode (micro organic light-emitting diode) display panel, a quantum dot light-emitting diode (quantum dot light emitting diodes, QLED) display panel, or the like.

For example, the display module 100 may further include structures such as a back film (not shown in the figure), a polarizer (Polarizer, POL) (not shown in the figure), and a protective cover (not shown in the figure). In an implementation, the display module 100 may further include a touch panel (not shown in the figure), and the like.

As shown in FIG. 6 to FIG. 8, a material of the support member 20 may be a composite material such as carbon fiber or glass fiber. It may be understood that the carbon fiber, the glass fiber, and the like have a high modulus. In another implementation, a material of the support member 20 may alternatively be a material like a stainless steel material, an aluminum alloy, a magnesium alloy, a titanium alloy, or a copper alloy. It may be understood that the stainless steel and the titanium alloy are materials with high modulus, and have good support performance. The aluminum alloy, the magnesium alloy, and the copper alloy have good heat dissipation performance. The support member 20 may balance requirements of weight, an elastic modulus, stiffness, and heat conduction performance as much as possible through material selection and a structure design.

As shown in FIG. 6 to FIG. 8, the display panel 10 includes a first display area 11, a second display area 12, a third display area 13, a fourth display area 14, and a fifth display area 15 that are sequentially connected in the X-axis direction. In other words, the second display area 12 is connected between the first display area 11 and the third display area 13. The fourth display area 14 is connected between the third display area 13 and the fifth display area 15. It may be understood that, in FIG. 6 and FIG. 7, the first display area 11, the second display area 12, the third display area 13, the fourth display area 14, and the fifth display area 15 are schematically distinguished by using dashed lines.

As shown in FIG. 6 to FIG. 8, the support member 20 includes a first fastening part 21, a first bent part 22, a second fastening part 23, a second bent part 24, and a third fastening part 25 that are sequentially connected in the X-axis direction. In other words, the first bent part 22 is connected between the first fastening part 21 and the second fastening part 23. The second fastening part 23 is connected between the first bent part 22 and the second bent part 24. The second bent part 24 is connected between the second fastening part 23 and the third fastening part 25. It may be understood that, although an arrangement direction of parts of the support member 20 is the same as an arrangement direction of parts of the display panel 10, within a range of a process error or tolerance, the arrangement direction of the parts of the support member 20 may be different from the arrangement direction of the parts of the display panel 10, that is, the two arrangement directions are not strictly parallel to each other.

It may be understood that the first fastening part 21, the first bent part 22, the second fastening part 23, the second bent part 24, and the third fastening part 25 are of an integral structure, that is, the support member 20 is an integrally formed mechanical part. In this case, connection firmness between the first fastening part 21, the first bent part 22, the second fastening part 23, the second bent part 24, and the third fastening part 25 is good. In addition, the first fastening part 21, the first bent part 22, the second fastening part 23, the second bent part 24, and the third fastening part 25 are formed in a small quantity of steps, so that costs of preparing the support member 20 can be reduced. In another implementation, the first fastening part 21, the first bent part 22, the second fastening part 23, the second bent part 24, and the third fastening part 25 may alternatively be formed through welding or connected through snap-fitting.

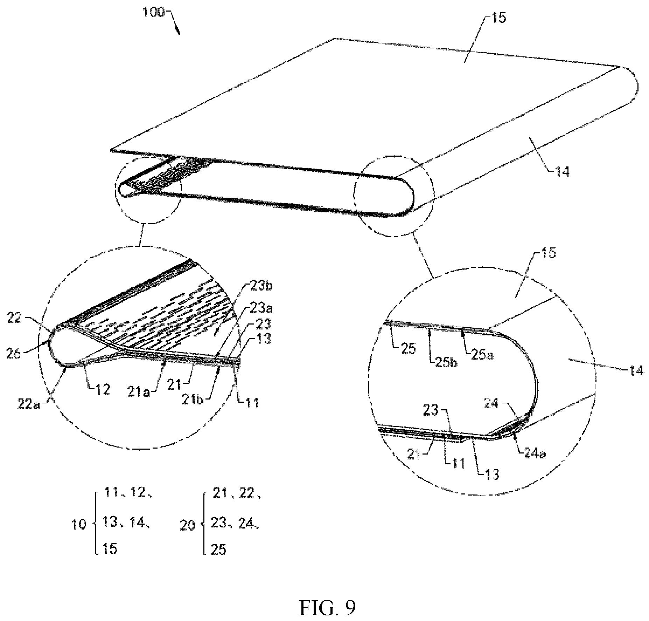

FIG. 9 is a diagram of a structure of the display module 100 shown in FIG. 5 according to an implementation.

Refer to FIG. 9. With reference to FIG. 6 to FIG. 8, the support member 20 is fastened to a non-display surface of the display panel 10. For example, a first surface 21a of the first fastening part 21 of the support member 20 is fastened to the first display area 11 of the display panel 10. A first surface 22a of the first bent part 22 of the support member 20 is fastened to the second display area 12 of the display panel 10. A first surface 23a of the second fastening part 23 of the support member 20 is fastened to the third display area 13 of the display panel 10. A first surface 24a of the second bent part 24 of the support member 20 is fastened to the fourth display area 14 of the display panel 10. A first surface 25a of the third fastening part 25 of the support member 20 is fastened to the fifth display area 15 of the display panel 10. In this way, the first fastening part 21 is disposed opposite to the first display area 11. The first bent part 22 is disposed opposite to the second display area 12. The second fastening part 23 is disposed opposite to the third display area 13. The second bent part 24 is disposed opposite to the fourth display area 14. The third fastening part 25 is disposed opposite to the fifth display area 15. It may be understood that, as shown in FIG. 6, when the electronic device 1000 is in the unfolded state, the first surface 21a of the first fastening part 21, the first surface 22a of the first bent part 22, the first surface 23a of the second fastening part 23, the first surface 24a of the second bent part 24, and the first surface 25a of the third fastening part 25 may be located on a same surface.

It may be understood that the first display area 11 of the display panel 10 and the first fastening part 21 of the support member 20 may form a portion of the first part 100A (refer to FIG. 4 and FIG. 5) of the display module 100. The second display area 12 of the display panel 10 and the first bent part 22 of the support member 20 may form a portion of the second part 100B (refer to FIG. 4 and FIG. 5) of the display module 100. The third display area 13 of the display panel 10 and the second fastening part 23 of the support member 20 may form a portion of the third part 100C (refer to FIG. 4 and FIG. 5) of the display module 100. The fourth display area 14 of the display panel 10 and the second bent part 24 of the support member 20 may form a portion of the fourth part 100D (refer to FIG. 4 and FIG. 5) of the display module 100. The fifth display area 15 of the display panel 10 and the third fastening part 25 of the support member 20 may form a portion of the fifth part 100E (refer to FIG. 4 and FIG. 5) of the display module 100.

It may be understood that the support member 20 may be configured to provide rigid support for the display panel 10, to improve support strength of the display panel 10. In addition, the support member 20 can also be bent under external force while ensuring certain stiffness. In other words, the support member 20 further has certain bendable performance. The following specifically describes a structure of the support member 20 with reference to related accompanying drawings. Refer to FIG. 9. With reference to FIG. 6 to FIG. 8, a second surface 21b of the first fastening part 21 is fastened to the first housing 210 (refer to FIG. 4 and FIG. 5). A second surface 23b of the second fastening part 23 is fastened to the second housing 220 (refer to FIG. 4 and FIG. 5). A second surface 25b of the third fastening part 25 is fastened to the third housing 230 (refer to FIG. 4 and FIG. 5). A first surface 21a of the first fastening part 21 is opposite to the second surface 21b of the first fastening part 21. A first surface 23a of the second fastening part 23 is opposite to the second surface 23b of the second fastening part 23. A first surface 25a of the third fastening part 25 is opposite to the second surface 25b of the third fastening part 25. It may be understood that the second surface 21b of the first fastening part 21 may be fastened to the first housing 210 through the first adhesive layer 1 (refer to FIG. 4 and FIG. 5). The second surface 23b of the second fastening part 23 may be fastened to the second housing 220 through the second adhesive layer 2 (refer to FIG. 4 and FIG. 5). The second surface 25b of the third fastening part 25 may be fastened to the third housing 230 through the third adhesive layer 3 (refer to FIG. 4 and FIG. 5). A manner of disposing the first adhesive layer 1, the second adhesive layer 2, and the third adhesive layer 3 is described in detail above with reference to FIG. 4. Details are not described herein again.

As shown in FIG. 6, when the electronic device 1000 is in the unfolded state, both the display panel 10 and the support member 20 may be in the unfolded state. For example, the first display area 11, the second display area 12, the third display area 13, the fourth display area 14, and the fifth display area 15 of the display panel 10 may be approximately at 180° (a slight deviation, for example, 165°, 177°, or 185°, is allowed). In addition, the first fastening part 21, the first bent part 22, the second fastening part 23, the second bent part 24, and the third fastening part 25 of the support member 20 may form a plate-like structure. In other words, the first fastening part 21, the first bent part 22, the second fastening part 23, the second bent part 24, and the third fastening part 25 may be approximately at 180° (a slight deviation, for example, 165°, 177°, or 185°, is allowed). As shown in FIG. 7, when the electronic device 1000 is in the first folded state, the display panel 10 may be in the first folded state. The first display area 11, the second display area 12, the third display area 13, the fourth display area 14, and the fifth display area 15 of the display panel 10 are all located on an outer side of the electronic device 1000. For example, when the electronic device 1000 is in the first folded state, the first display area 11, the second display area 12, and the third display area 13 of the display panel 10 may be approximately at 180° (a slight deviation, for example, 165°, 177°, or 185°, is allowed), the fourth display area 14 is bent, and the fifth display area 15 and the third display area 13 are disposed close to each other. In this case, the third part 100C and the fifth part 100E of the display module 100 may be arranged in the Z-axis direction.

As shown in FIG. 7, when the electronic device 1000 is in the first folded state, the support member 20 may be in the first folded state. For example, when the electronic device 1000 is in the first folded state, the first fastening part 21, the first bent part 22, and the second fastening part 23 form a plate-like structure, in other words, the first fastening part 21, the first bent part 22, and the second fastening part 23 may be approximately at 180° (a slight deviation, for example, 165°, 177°, or 185°, is allowed). In addition, the second bent part 24 is bent, and the third fastening part 25 and the second fastening part 23 are disposed close to each other. In this case, the third fastening part 25 and the second fastening part 23 may be stacked in the Z-axis direction.

As shown in FIG. 8 and FIG. 9, when the electronic device 1000 is in the second folded state, the display panel 10 may be in the second folded state. The first display area 11, the second display area 12, and the third display area 13 of the display panel 10 are located inside the electronic device 1000, and the fifth display area 15 and at least a portion of the fourth display area 14 of the display panel 10 are located on the outer side of the electronic device 1000. For example, the first display area 11 and the third display area 13 of the display panel 10 are disposed close to each other, and the third display area 13 and the fifth display area 15 of the display panel 10 are disposed close to each other. In this case, the first display area 11, the third display area 13, and the fifth display area 15 of the display panel 10 may be arranged in the Z-axis direction. In addition, the second display area 12 and the fourth display area 14 of the display panel 10 are bent.

In addition, when the electronic device 1000 is in the second folded state, the support member 20 may be in the second folded state. For example, the first fastening part 21 and the second fastening part 23 of the support member 20 are disposed close to each other, and the second fastening part 23 and the third fastening part 25 of the support member 20 are disposed close to each other. In this case, the first fastening part 21, the second fastening part 23, and the third fastening part 25 of the support member 20 may be stacked in the Z-axis direction. In addition, the first bent part 22 and the second bent part 24 of the support member 20 are bent. The first fastening part 21, the first bent part 22, and the second fastening part 23 of the support member 20 form an accommodation space 26. The first display area 11, the second display area 12, and the third display area 13 of the display panel 10 are located in the accommodation space 26. In addition, the fifth display area 15 and at least a portion of the fourth display area 14 are located outside the second bent part 24 and the third fastening part 25.

Refer to FIG. 9. With reference to FIG. 6 to FIG. 8, for example, stiffness of the first fastening part 21, stiffness of the second fastening part 23, and stiffness of the third fastening part 25 are greater than stiffness of the first bent part 22 and stiffness of the second bent part 24. In other words, among the first fastening part 21, the first bent part 22, the second fastening part 23, and the third fastening part 25, the first bent part 22 has minimum stiffness. In this way, stiffness of the second part 100B (refer to FIG. 4 and FIG. 5) of the display module 100 including the first bent part 22 and the second display area 12 is small. In this case, when the electronic device 1000 is in the second folded state, the second part 100B (refer to FIG. 4 and FIG. 5) of the display module 100 is more likely to be bent, and is likely to be disposed in the accommodation space 3104 (refer to FIG. 4 and FIG. 5). In addition, among the first fastening part 21, the second fastening part 23, the second bent part 24, and the third fastening part 25, the second bent part 24 has minimum stiffness. In this way, stiffness of the fourth part 100D of the display module 100 including the second bent part 24 and the fourth display area 14 is small. In this case, when the electronic device 1000 is in the second folded state, the fourth part 100D of the display module 100 is more likely to be bent. It may be understood that stiffness settings of the first fastening part 21, the second fastening part 23, the third fastening part 25, the first bent part 22, and the second bent part 24 are specifically described below with reference to related accompanying drawings.

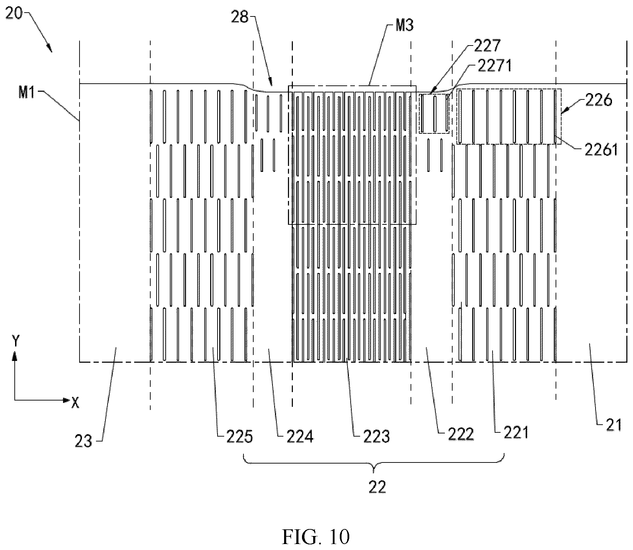

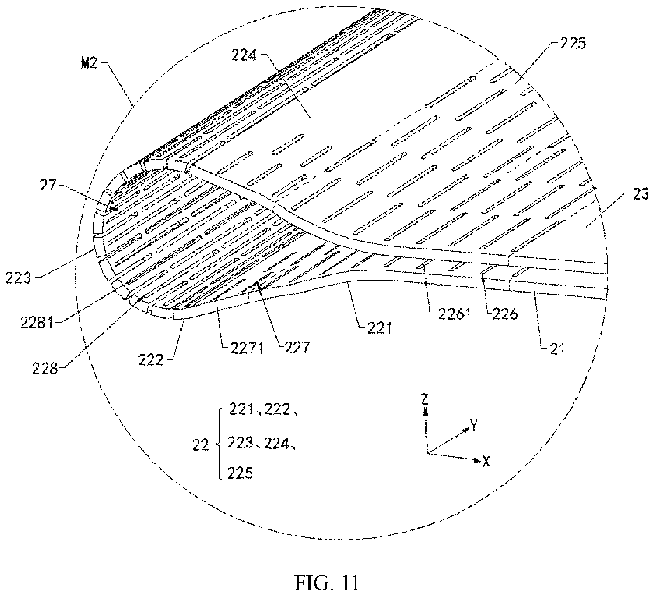

In some implementations, in the X-axis direction, a width of a first bent main part 223 is greater than a width of a first bent sub-part 221. The width of the first bent main part 223 is greater than a width of a second bent sub-part (225). This helps reduce overall stiffness of the first bent part 22. FIG. 10 is an enlarged view of the support member 20 shown in FIG. 6 at M1 according to an implementation. FIG. 11 is an enlarged view of the support member 20 shown in FIG. 8 at M2 according to an implementation.

As shown in FIG. 11 and FIG. 10, the first bent part 22 includes the first bent sub-part 221, a first connection part 222, the first bent main part 223, a second connection part 224, and a second bent sub-part 225 that are sequentially arranged in the X-axis direction. In other words, the first connection part 222 is located between the first bent sub-part 221 and the first bent main part 223. The first bent main part 223 is connected between the first connection part 222 and the second connection part 224. The second connection part 224 is located between the first bent main part 223 and the second bent sub-part 225. In addition, the first bent sub-part 221 is connected to the first fastening part 21. The second bent sub-part 225 is connected to the second fastening part 23. It may be understood that, although an arrangement direction of parts of the first bent part 22 is the same as an arrangement direction of parts of the display panel 10, within a range of a process error or tolerance, the arrangement direction of the parts of the first bent part 22 may be different from the arrangement direction of the parts of the display panel 10, that is, the two arrangement directions may not be strictly parallel to each other. In another implementation, the first bent part 22 may alternatively not include the second connection part 224 and/or the second bent sub-part 225. In another implementation, the first bent part 22 may further include a sixth bent sub-part, ..., and an M^{th} bent sub-part.

It may be understood that the first bent sub-part 221 and the second bent sub-part 225 may be same or similar structures, symmetrical or partially symmetrical structures, or different structures. In this implementation, the first bent sub-part 221 and the second bent sub-part 225 are symmetrical structures. For details of a basic design of a component structure of the second bent sub-part 225, a design of a connection relationship between components, and a design of a connection relationship between a component and another structure other than the component, refer to a related solution of the first bent sub-part 221. In addition, the second bent sub-part 225 and the first bent sub-part 221 are allowed to be slightly different in a detailed structure or a position arrangement of components. It may be understood that the first bent sub-part 221 and the second bent sub-part 225 are symmetrical structures. Therefore, the following uses the first bent sub-part 221 as an example for description, and a specific structure of the second bent sub-part 225 is not described herein again.

In addition, the first connection part 222 and the second connection part 224 may be same or similar structures, symmetrical or partially symmetrical structures, or different structures. In this implementation, the first connection part 222 and the second connection part 224 are symmetrical structures. For details of a basic design of a component structure of the second connection part 224, a design of a connection relationship between components, and a design of a connection relationship between a component and another structure other than the component, refer to a related solution of the first connection part 222. In addition, the second connection part 224 and the first connection part 222 are allowed to be slightly different in a detailed structure or a position arrangement of components. It may be understood that the first connection part 222 and the second connection part 224 are symmetrical structures. Therefore, the first connection part 222 is used as an example for description below, and a specific structure of the second connection part 224 is not described herein again.

Refer to FIG. 10. With reference to FIG. 7, when the electronic device 1000 is in the unfolded state or the first folded state, the first bent sub-part 221, the first connection part 222, the first bent main part 223, the second connection part 224, and the second bent sub-part 225 of the first bent part 22 may form a plate-like structure. In other words, the first bent sub-part 221, the first connection part 222, the first bent main part 223, the second connection part 224, and the second bent sub-part 225 of the first bent part 22 may be approximately at 180° (a slight deviation, for example, 165°, 177°, or 185° is allowed).

As shown in FIG. 11, when the electronic device 1000 is in the second folded state, the first bent main part 223 bends in a folding direction, the first bent sub-part 221 and the second bent sub-part 225 bend away from the folding direction, and the accommodation space 27 is jointly formed by the first bent sub-part 221, the first connection part 222, the first bent main part 223, the second connection part 224, and the second bent sub-part 225 of the first bent part 22. The accommodation space 27 is configured to accommodate at least a portion of the second display area 12 (refer to FIG. 8). It may be understood that, when the electronic device 1000 switches between the first folded state and the second folded state (that is, in a process in which the electronic device 1000 is unfolded or folded relatively), the first bent main part 223 bends in the folding direction, and the first bent sub-part 221 and the second bent sub-part 225 band away from the folding direction. In other words, bending directions of the first bent sub-part 221 and the second bent sub-part 225 are different from the bending direction of the first bent main part 223.

As shown in FIG. 11 and FIG. 10, stiffness of the first bent sub-part 221 is less than stiffness of the first connection part 222. The stiffness of the first bent main part 223 is less than stiffness of the first bent sub-part 221. In this way, stiffness of the first bent main part 223 is also less than stiffness of the first connection part 222. In other words, among the first bent sub-part 221, the first connection part 222, and the first bent main part 223, the first connection part 222 has maximum stiffness, and the first bent main part 223 has minimum stiffness. It may be understood that there are a plurality of implementations in a solution in which the stiffness of the first bent sub-part 221 is less than the stiffness of the first connection part 222.

In an implementation, a material of the first bent sub-part 221 is the same as a material of the first connection part 222. In a solution, both the first bent sub-part 221 and the first connection part 222 are provided with through holes or grooves. A through hole is used as an example for description. In this case, a quantity of holes of the first bent sub-part 221 may be set to be different from a quantity of through holes of the first connection part 222, and a size of the through hole of the first bent sub-part 221 may be set to be different from a size of the through hole of the first connection part 222, and/or a shape of the through hole of the first bent sub-part 221 is different from a shape of the through hole of the first connection part 222, so that stiffness of the first bent sub-part 221 is less than stiffness of the first connection part 222. In another solution, the first bent sub-part 221 may be provided with a through hole or a groove, and the first connection part 222 is provided with no through hole or groove, so that stiffness of the first bent sub-part 221 is less than stiffness of the first connection part 222. In still another solution, both the first bent sub-part 221 and the first connection part 222 are provided with no through hole or groove. In this case, a thickness of the first bent sub-part 221 may be set to be less than a thickness of the first connection part 222, and/or a weight per unit volume of the first bent sub-part 221 may be set to be less than a weight per unit volume of the first connection part 222. In this way, the stiffness of the first bent sub-part 221 is less than the stiffness of the first connection part 222.

In an implementation, the material of the first bent sub-part 221 may be set to be different from the material of the first connection part 222, so that the stiffness of the first bent sub-part 221 is less than the stiffness of the first connection part 222. For example, the material of the first bent sub-part 221 is a flexible material (for example, rubber), and the material of the first connection part 222 is a metal material (for example, stainless steel). In another implementation, in one aspect, the material of the first bent sub-part 221 is set to be different from the material of the first connection part 222, and in another aspect, the first bent sub-part 221 and/or the first connection part 222 are/is provided with a hole. In this way, the stiffness of the first bent sub-part 221 is less than the stiffness of the first connection part 222.

Similarly, there are also a plurality of implementations in a solution in which the stiffness of the first bent main part 223 is less than the stiffness of the first bent sub-part 221. For this implementation, refer to a solution in which the stiffness of the first bent sub-part 221 is less than the stiffness of the first connection part 222. For example, the thickness of the first bent main part 223 may be set to be less than the thickness of the first bent sub-part 221, and/or the weight per unit volume of the first bent main part 223 may be set to be less than the weight per unit volume of the first bent sub-part 221. Details are not specifically described herein again.

Similarly, there are also a plurality of implementations in a solution in which the stiffness of the first bent main part 223 is less than the stiffness of the first connection part 222. For this implementation, refer to a solution in which the stiffness of the first bent sub-part 221 is less than the stiffness of the first connection part 222. For example, the thickness of the first bent main part 223 may be set to be less than the thickness of the first connection part 222, and/or the weight per unit volume of the first bent main part 223 may be set to be less than the weight per unit volume of the first connection part 222. Details are not specifically described herein again.

In addition, the stiffness of both the first fastening part and the second fastening part of the support member is greater than the stiffness of the first bent part of the support member, and therefore, the stiffness of the first fastening part and the second fastening part of the support member is also greater than the stiffness of the first bent main part 223 of the first bent part of the support member. It may be understood that there are also a plurality of implementations in a solution in which the stiffness of both the first fastening part and the second fastening part of the support member is greater than the stiffness of the first bent main part 223 of the first bent part of the support member. For this implementation, refer to a solution in which the stiffness of the first bent sub-part 221 is less than the stiffness of the first connection part 222. Details are not specifically described herein again.

The following specifically describes structures of the first bent sub-part 221, the first connection part 222, and the first bent main part 223 with reference to related accompanying drawings according to an implementation.

As shown in FIG. 11 and FIG. 10, in an implementation, the first bent sub-part 221 of the first bent part 22 is provided with a plurality of rows of first through hole groups 226. The plurality of rows of first through hole groups 226 may be arranged from the top to the bottom of the first bent sub-part 221, that is, the plurality of rows of first through hole groups 226 may be arranged in the Y-axis direction. The first through hole group 226 includes a plurality of first through holes 2261 that are spaced away from each other. The plurality of first through holes 2261 may be spaced away from each other from the left part to the right part of the first bent sub-part 221, that is, the plurality of first through holes 2261 may be spaced away from each other in the X-axis direction. It may be understood that FIG. 11 schematically provides a first through hole group 226 in a row by using a rectangular frame, to clearly distinguish the first through hole group 226 in each row.

For example, the first through hole 2261 penetrates two plate surfaces of the first bent sub-part 221 in the Z-axis direction.

With reference to FIG. 6, the first through hole groups 226 are disposed in the entire area of the first bent sub-part 221, that is, the first through hole groups 226 are disposed at both the end part and the middle part of the first bent sub-part 221. In another implementation, the first through hole group 226 may alternatively be disposed in a partial area of the first bent sub-part 221. For example, the first through hole group 226 is disposed only in the middle part of the first bent sub-part 221. This is not specifically limited in this application.

In this implementation, two adjacent rows of first through hole groups 226 may be spaced away from each other in the Y-axis direction. In other words, there is an interval between the two adjacent rows of first through hole groups 226 in the Y-axis direction. In addition, the plurality of first through holes 2261 of the first through hole group 226 are staggered. For example, a first through hole 2261 of one first through hole group 226 may be between two adjacent first through holes 2261 of another first through hole group 226. In another implementation, a plurality of first through holes 2261 of two adjacent rows of first through hole groups 226 may alternatively be staggered, oppositely arranged, partially oppositely arranged, partially staggered, or in another arrangement manner.

As shown in FIG. 11 and FIG. 10, for example, the first through hole 2261 is bar-shaped. A length extension direction of the first through hole 2261 may be a Y-axis. It may be understood that the length extension direction of the first through hole 2261 may be a length direction of an opening of the first through hole 2261 on the plate surface of the support member 20. For a length extension direction of a hole in the following, refer to a definition of the extension direction of the first through hole 2261. Details are not described again. It may be understood that a shape of the first through hole 2261 may alternatively be a dumbbell shape, a rhombus shape, a square shape, a waist circle shape, or the like. This is not specifically strictly limited in this application.

In another implementation, the first bent sub-part 221 of the first bent part 22 is provided with a plurality of rows of first groove groups. The plurality of rows of first groove groups include a plurality of first grooves. An opening of a first groove may form an opening on the second surface 22b (refer to FIG. 8) of the first bent part 22. In this way, the first groove may be away from the second display area 12 of the display panel 10 (refer to FIG. 8). Certainly, in another implementation, the opening of the first groove may form an opening on the first surface 22a (refer to FIG. 8) of the first bent part 22. This is not specifically limited in this application. The first surface 22a of the first bent part 22 and the second surface 22b of the first bent part 22 are disposed opposite to each other. In addition, for a manner of disposing the plurality of first groove groups, refer to a manner of disposing the plurality of rows of first through hole groups 226. Details are not specifically described herein again.

As shown in FIG. 11 and FIG. 10, for example, a plurality of rows of second through hole groups 227 may be disposed on at least one side edge of the first connection part 222. The plurality of rows of second through hole groups 227 may be arranged from the top to the middle part, and/or arranged from the bottom to the middle part. In this case, the plurality of rows of second through hole groups 227 may be arranged in the Y-axis direction. The second through hole group 227 includes a plurality of second through holes 2271 that are spaced away from each other. The plurality of second through holes 2271 are spaced away from each other from the left side to the right side of the first connection part 222, that is, the plurality of second through holes 2271 may be spaced away from each other in the X-axis direction. It may be understood that FIG. 10 schematically provides a second through hole group 227 in a row by using a rectangular frame, to clearly distinguish the second through hole group 227 in each row. In addition, FIG. 10 and FIG. 11 both show that the first connection part 222 is provided with two rows of second through hole groups 227, there are three second through holes 2271 in a first-row second through hole group 227, and there are two second through holes 2271 in a second-row second through hole group 227. In another implementation, a quantity of rows of the second through hole groups 227 and a quantity of second through holes 2271 in the second through hole group 227 are not specifically limited. For example, the second through hole 2271 penetrates two plate surfaces of the first connection part 222 in the Z-axis direction.

As shown in FIG. 11 and FIG. 10, for example, the second through hole 2271 is bar-shaped. A length extension direction of the second through hole 2271 may be a Y-axis. It may be understood that, in another implementation, a shape of the second through hole 2271 may alternatively be a dumbbell shape, a rhombus shape, a square shape, a waist circle shape, or the like. This is not specifically strictly limited in this application.

It may be understood that, in comparison with a case in which the first through hole groups 226 are disposed in the entire area of the first bent sub-part 221, a plurality of rows of second through hole groups 227 are disposed on at least one side edge of the first connection part 222, in other words, the middle part of the first connection part 222 is provided with no second through hole group 227. In this way, compared with the first bent sub-part 221, the first connection part 222 has larger stiffness, that is, the stiffness of the first connection part 222 is greater than the stiffness of the first bent sub-part 221.

In this implementation, for an arrangement manner of two adjacent rows of second through hole groups 227 and an arrangement manner of the plurality of second through holes 2271 of the second through hole group 227, refer to an arrangement manner of two adjacent rows of first through hole groups 226, and an arrangement manner of the plurality of first through holes 2261 of the first through hole group 226. Details are not described herein again. Certainly, in another implementation, an arrangement manner of the second through hole group 227 may alternatively be different from an arrangement manner of the first through hole group 226, and an arrangement manner of the plurality of second through holes 2271 of the second through hole group 227 is different from an arrangement manner of the plurality of first through holes 2261 of the first through hole group 226. Details are not specifically described herein again.

In another implementation, the first connection part 222 may alternatively be provided with a plurality of rows of second groove groups. The plurality of rows of second groove groups include a plurality of second grooves. An opening of a second groove may form an opening on the second surface 22b (refer to FIG. 8) of the first bent part 22. In this way, the second groove may be away from the second display area 12 of the display panel 10 (refer to FIG. 8). Certainly, in another implementation, the opening of the second groove may form an opening on the first surface 22a (refer to FIG. 8) of the first bent part 22. This is not specifically limited in this application. In addition, for a manner of disposing the plurality of rows of second groove groups, refer to a manner of disposing the plurality of rows of second through hole groups 227. Details are not specifically described herein again.

In another implementation, the first connection part 222 may alternatively be a complete plate-like structure, that is, the first connection part 222 is provided with no second through hole 2271.

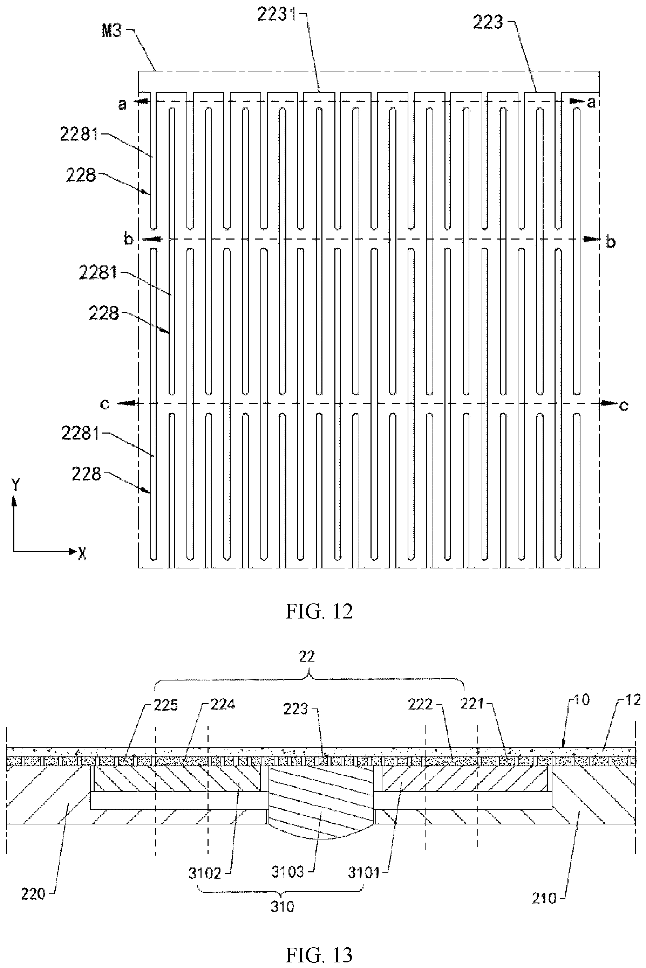

FIG. 12 is an enlarged view of the support member 20 shown in FIG. 10 at M3 according to an implementation.

Refer to FIG. 12, with reference to FIG. 10 and FIG. 11, the first bent main part 223 of the first bent part 22 is provided with a plurality of rows of through hole groups 228. The plurality of rows of through hole groups 228 may be arranged from the top to the bottom of the first bent main part 223, that is, the plurality of rows of through hole groups 228 may be arranged in the Y-axis direction. The through hole group 228 includes a plurality of through holes 2281 that are spaced away from each other. The plurality of through holes 2281 are spaced away from each other from the left side to the right side of the first bent main part 223, that is, the plurality of through holes 2281 may be spaced away from each other in the X-axis direction. It may be understood that FIG. 12 shows three dashed lines each with double arrows. Through holes 2281 through which a dashed line aa with double arrows passes form a through hole group 228 in a first row. Through holes 2281 through which a dashed line bb with double arrows passes form a through hole group 228 in a second row. Through holes 2281 through which a dashed line cc with double arrows passes form a through hole group 228 in a third row.

For example, the through hole 2281 is bar-shaped. A length extension direction of the through hole 2281 may be a Y-axis. In another implementation, a shape of the through hole 2281 may alternatively be a dumbbell shape, a rhombus shape, a square shape, a waist circle shape, or the like. This is not specifically strictly limited in this application.

Refer to FIG. 12. With reference to FIG. 10 and FIG. 11, the plurality of through holes 2281 penetrate two plate surfaces of the first bent main part 223 in the Z-axis direction. In addition, the through hole group 228 in one row of the plurality of rows of through hole groups 228 penetrates a first side edge 2231 of the first bent main part 223 in the Y-axis direction. The through hole group 228 in another row of the plurality of rows of through hole groups 228 penetrates a second side edge 2232 of the first bent main part 223 in the Y-axis direction (refer to FIG. 6). The first side edge 2231 and the second side edge 2232 are two side edges that are of the first bent main part 223 and that are disposed opposite to each other in the Y-axis direction. In other words, the first side edge 2231 and the second side edge 2232 are disposed opposite to each other and are arranged in the Y-axis direction. In this way, stiffness of the first bent main part 223 may be further reduced. Refer to FIG. 12. With reference to FIG. 6, the through hole groups 228 are disposed in the entire area of the first bent main part 223, that is, the through hole groups 228 are disposed at both the end part and the middle part of the first bent main part 223. In another implementation, the through hole group 228 may alternatively be disposed in a partial area of the first bent main part 223. For example, the through hole group 228 is disposed only in the middle part of the first bent main part 223. This is not specifically limited in this application.

For example, a plurality of through holes 2281 of two adjacent through hole groups 228 are staggered. In an implementation, one end part of the through hole 2281 of the through hole group 228 in the second row may be located between two adjacent through holes 2281 of the through hole group 228 in the first row. Another end part of the through hole 2281 of the through hole group 228 in the second row may be located between two adjacent through holes 2281 of the through hole group 228 in the third row. In other words, two upper and lower adjacent through hole groups 228 may reuse a portion of a space in the Y-axis direction. In this embodiment, when the first bent main part 223 is sectioned in the X-axis direction, the first bent main part 223 is divided into a plurality of portion through the through holes 2281, that is, the first bent main part 223 has no continuous portion. In this case, flexibility of the first bent main part 223 is further improved. In this way, in a process of unfolding or folding the electronic device 1000, the first bent main part 223 has better flexibility. It may be understood that, compared with that in the arrangement manner of the first through hole groups 226 of the first bent sub-part 221, in an arrangement manner of the through hole groups 228 of the first bent main part 223, stiffness of the first bent main part 223 is smaller, in other words, the stiffness of the first bent main part 223 is less than that of the first bent sub-part 221.

In another implementation, two adjacent through hole groups 228 may alternatively be spaced away from each other in the Y-axis direction. In another implementation, a plurality of through holes 2281 of two adjacent through hole groups 228 may alternatively be staggered, oppositely arranged, partially oppositely arranged, partially staggered, or in another arrangement manner.

Refer to FIG. 12. With reference to FIG. 10 and FIG. 11, for example, in the X-axis direction, a distance between two adjacent through holes 2281 is less than a distance between two adjacent first through holes 2261. Therefore, the through holes 2281 of the first bent main part 223 are densely arranged. The stiffness of the first bent main part 223 is small, that is, the stiffness of the first bent main part 223 is also less than the stiffness of the first bent sub-part 221.

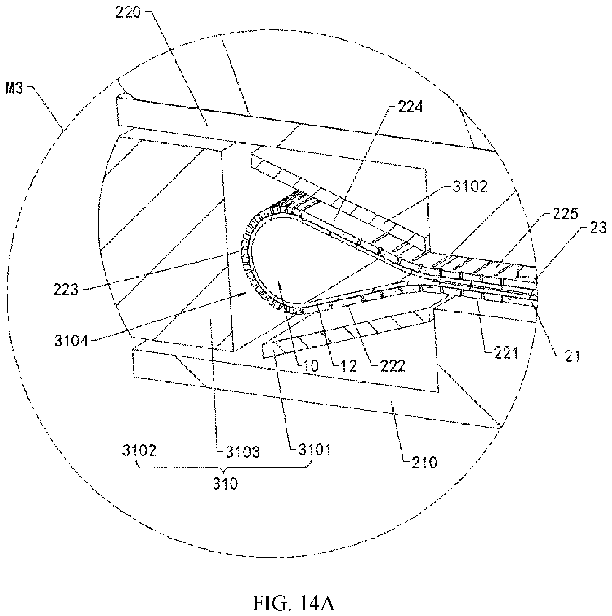

In another implementation, the first bent sub-part 221 of the first bent part 22 is provided with a plurality of rows of third groove groups. An opening of a third groove may form an opening on the second surface 22b (refer to FIG. 8) of the first bent part 22. In this way, the third groove may be away from the second display area 12 of the display panel 10 (refer to FIG. 8). Certainly, in another implementation, the opening of the third groove may form an opening on the first surface 22a (refer to FIG. 8) of the first bent part 22. This is not specifically limited in this application. In addition, the plurality of rows of third groove groups include a plurality of third grooves. For a manner of disposing the plurality of third groove groups, refer to a manner of disposing the plurality of rows of through hole groups 228. Details are not specifically described herein again. FIG. 13 is a partial sectional view of the electronic device 1000 shown in FIG. 1 at a B-B line according to an implementation. FIG. 14A is a partial enlarged view of the electronic device 1000 shown in FIG. 5 at M4 according to an implementation.

As shown in FIG. 13 and FIG. 14A, the first bent sub-part 221, the first connection part 222, the first bent main part 223, the second connection part 224, and the second bent sub-part 225 of the first bent part 22 are fastened to different areas of a non-display surface of the second display area 12 of the display panel 10. In one aspect, the first bent part 22 can improve stiffness of the second display area 12, to improve a squeezing resistance capability and an impact resistance capability of the second display area 12 when the electronic device 1000 is in the unfolded state. In another aspect, the first bent part 22 has different stiffness in different areas. In this way, the first bent part 22 can meet different bending requirements of the second display area 12 in different areas when the electronic device 1000 is in the second folded state. It may be understood that, in FIG. 13, the first bent sub-part 221, the first connection part 222, the first bent main part 223, the second connection part 224, and the second bent sub-part 225 are schematically divided by using different dashed lines.

As shown in FIG. 13, when the electronic device 1000 is in the unfolded state or the first folded state, the first bent sub-part 221, the first connection part 222, the first bent main part 223, the second connection part 224, and the second bent sub-part 225 of the first bent part 22 support different areas of the second display area 12 of the display panel 10. The first bent part 22 may be configured to improve stiffness of the second display area 12 of the display panel 10. In this way, when the second display area 12 of the display panel 10 is pressed or squeezed, the second display area 12 of the display panel 10 has sufficient strength to resist pressing force and squeezing force, so as to avoid a problem like a depression in the second display area 12 of the display panel 10. For example, when the electronic device 1000 is in the unfolded state or the first folded state, the first hinge structure 3103, the first inward foldable plate 3101, and the second inward foldable plate 3102 of the inward foldable mechanism 310 are unfolded relative to each other, and both the first inward foldable plate 3101 and the second inward foldable plate 3102 are stacked with the first bent part 22. The first bent part 22 of the support member 20 located above the first inward foldable plate 3101, the second inward foldable plate 3102, and the first hinge structure 3103 is configured to support the second display area 12 of the display panel 10. In this way, with support of the first inward foldable plate 3101, the second inward foldable plate 3102, and the first hinge structure 3103, a squeezing resistance capability and an impact resistance capability of the second display area 12 when the electronic device 1000 is in the unfolded state can also be further improved.

For example, when the electronic device 1000 is in the unfolded state or the first folded state, the first hinge structure 3103, the first inward foldable plate 3101, and the second inward foldable plate 3102 may jointly support the first bent main part 223 of the first bent part 22. The first inward foldable plate 3101 may be further configured to support at least a portion of the first bent sub-part 221 and the first connection part 222. The second inward foldable plate 3102 may be further configured to support the second connection part 224 and at least a portion of the second bent sub-part 225. For example, a portion of the first bent sub-part 221 faces the first housing 210, a portion of the first bent sub-part 221 faces between the first housing 210 and the first inward foldable plate 3101, and a portion of the first bent sub-part 221 faces the first inward foldable plate 3101. At least a portion of the first connection part 222 faces the first inward foldable plate 3101. At least a portion of the first bent main part 223 faces the first hinge structure 3103. A portion of the second bent sub-part 225 faces the second housing 220, a portion of the second bent sub-part 225 faces between the second housing 220 and the second inward foldable plate 3102, and a portion of the second bent sub-part 225 faces the second inward foldable plate 3102. At least a portion of the second connection part 224 faces the second inward foldable plate 3102.

Refer to FIG. 14A. With reference to FIG. 11, when the electronic device 1000 is in the second folded state, the first inward foldable plate 3101 and the second inward foldable plate 3102 are close to each other, the accommodation space 3104 is enclosed by the first inward foldable plate 3101, the second inward foldable plate 3102, and the first hinge structure 3103, and both the second display area 12 of the display panel 10 and the first bent part 22 of the support member 20 are in a bent shape. In addition, the second display area 12, the first bent sub-part 221, the first connection part 222, the first bent main part 223, the second connection part 224, and the second bent sub-part 225) are all located in the accommodation space 3104. The first bent main part 223 of the first bent part 22 is bent in a direction close to the first hinge structure 3103 (that is, bent in a folding direction). In this way, the first bent sub-part 221 and the second bent sub-part 225 of the first bent part 22 are close to each other, and the first connection part 222 and the second connection part 224 of the first bent part 22 are also close to each other. In addition, both the first bent sub-part 221 and the second bent sub-part 225 of the first bent part 22 are bent away from the folding direction, so that the first fastening part 21 and the second fastening part 23 are close to each other. In this case, the first bent part 22 of the support member 20 and the second display area 12 of the display panel 10 can be bent into a shape with a small volume (for example, a water drop shape). In other words, the first bent part 22 of the support member 20 and the second display area 12 of the display panel 10 can be accommodated in the accommodation space 3104 of the inward foldable mechanism 310 in a smaller volume. For example, a portion of the first bent sub-part 221 faces the first housing 210, a portion of the first bent sub-part 221 faces between the first housing 210 and the first inward foldable plate 3101, a portion of the first bent sub-part 221 faces the first inward foldable plate 3101, at least a portion of the first connection part 222 faces the first inward foldable plate 3101, and at least a portion of the first bent main part 223 faces the first hinge structure 3103. A portion of the second bent sub-part 225 faces the second housing 220, a portion of the second bent sub-part 225 faces between the second housing 220 and the second inward foldable plate 3102, and a portion of the second bent sub-part 225 faces the second inward foldable plate 3102. At least a portion of the second connection part 224 faces the second inward foldable plate 3102.

Refer to FIG. 13 and FIG. 14A. In this implementation, among the first bent sub-part 221, the first connection part 222, the first bent main part 223, the second connection part 224, and the second bent sub-part 225 of the first bent part 22, the first bent main part 223 has minimum stiffness, and therefore, the first bent main part 223 has a better bending capability, that is, the first bent main part 223 can be bent at a large amplitude when the electronic device 1000 is in the second folded state. In this way, the first connection part 222 and the second connection part 224 of the first bent part 22 can be disposed close to each other to a large extent, and the first bent sub-part 221 and the second bent sub-part 225 of the first bent part 22 can be disposed close to each other to a large extent. In this case, the first bent part 22 of the support member 20 and the second display area 12 of the display panel 10 can be bent into a shape with a smaller volume. In this way, the first bent part 22 of the support member 20 may meet the bending requirement of the second display area 12 of the display panel 10 better, so that the first bent part 22 of the support member 20 and the second display area 12 of the display panel 10 can adapt to the accommodation space 3104 of the inward foldable mechanism 310 better.

In addition, in this implementation, stiffness of the first bent sub-part 221 of the first bent part 22 is set to be less than stiffness of the first connection part 222 of the first bent part 22, and stiffness of the second bent sub-part 225 of the first bent part 22 is less than the stiffness of the second connection part 224 of the first bent part 22, so that both the first bent sub-part 221 and the second bent sub-part 225 of the first bent part 22 have a specific bending capability. In this case, the middle part of the first bent sub-part 221 of the first bent part 22 may be bent in a direction close to the second bent sub-part 225 (that is, bent away from the folding direction). The middle part of the second bent sub-part 225 of the first bent part 22 may be bent in a direction close to the first bent sub-part 221 (that is, bent away from the folding direction). The first bent sub-part 221 and the second bent sub-part 225 of the first bent part 22 can be further disposed close to each other, and the first connection part 222 and the second connection part 224 of the first bent part 22 can be further disposed close to each other. In this case, the first bent part 22 of the support member 20 and the second display area 12 of the display panel 10 can be bent into a shape with a smaller volume. In other words, the first bent part 22 of the support member 20 and the second display area 12 of the display panel 10 can be accommodated in the accommodation space 3104 of the inward foldable mechanism 310 in a smaller volume. In this way, the first bent part 22 of the support member 20 may meet the bending requirement of the second display area 12 of the display panel 10 better, so that the first bent part 22 of the support member 20 and the second display area 12 of the display panel 10 can adapt to the accommodation space 3104 of the inward foldable mechanism 310 better.

It may be understood that, in some implementations, in the X-axis direction, a width of the first bent main part 223 is greater than a width of the first bent sub-part 221. In this way, overall stiffness of the first bent part 22 is reduced, so that the first bent part 22 of the support member 20 and the second display area 12 of the display panel 10 can be bent into a shape with a smaller volume, and the first bent part 22 of the support member 20 and the second display area 12 of the display panel 10 can be accommodated in the accommodation space 3104 of the inward foldable mechanism 310 with a smaller volume.

For example, in a folding process of the electronic device 1000, the first inward foldable plate 3101 may apply acting force to the first bent sub-part 221 of the first bent part 22, and the second inward foldable plate 3102 may apply acting force to the second bent sub-part 225 of a second support plate. In this case, the middle part of the first bent sub-part 221 of the first bent part 22 may be bent in a direction close to the second bent sub-part 225 (that is, bent away from the folding direction). The middle part of the second bent sub-part 225 of the first bent part 22 may be bent in a direction close to the first bent sub-part 221 (that is, bent away from the folding direction). In another implementation, another component of the inward foldable mechanism 310 may also be used to apply acting force to the first bent sub-part 221 of the first bent part 22. Another component of the inward foldable mechanism 310 may also be used to apply acting force to the second bent sub-part 225 of the second support plate. This is not specifically limited in this application.

With reference to FIG. 10 and FIG. 11, it may be understood that, in comparison with a solution in which the first connection part 222 is provided with no second through hole group 227, in this implementation, a plurality of rows of second through hole groups 227 are disposed on at least one side edge of the first connection part 222. In this way, stiffness of the first connection part 222 is reduced, that is, the first connection part 222 has specific flexibility. In this case, the stiffness of the first connection part 222 may provide a transitional function between the stiffness of the first bent sub-part 221 and the stiffness of the first bent main part 223. In other words, stiffness of a connection area between the first bent sub-part 221 and the first bent main part 223 is not high. The stiffness of the first bent sub-part 221, the stiffness of the first connection part 222, and the stiffness of the first bent main part 223 are continuous. In this way, when the electronic device 1000 is impacted due to falling, a bump with a large bending amplitude is more unlikely to be generated on a side edge of the first connection part 222, to ensure that the first connection part 222 can be restored after impact, that is, the first connection part 222 is unlikely to be damaged. In other words, when the electronic device 1000 is impacted due to falling, the support member 20 is unlikely to be folded.

In addition, in the first connection part 222, the second through hole groups 227 of the first connection part 222 are spaced away from each other on the side edge of the first connection part 222, in other words, the second through hole group 227 of the first connection part 222 does not penetrate the side edge of the first connection part 222. In this way, the stiffness of the first connection part 222 is unlikely to be reduced to a large extent. The stiffness of the first connection part 222 provides a gently transitional function between the stiffness of the first bent sub-part 221 and the stiffness of the first bent main part 223. In other words, stiffness of a connection area between the first bent sub-part 221 and the first bent main part 223 is not low. In this case, the stiffness of the first bent sub-part 221, the stiffness of the first connection part 222, and the stiffness of the first bent main part 223 are more continuous. In this way, when the electronic device 1000 is impacted due to falling, a bump with a large bending amplitude is more unlikely to be generated on a side edge of the first connection part 222, to ensure that the first connection part 222 can be restored after impact, that is, the first connection part 222 is unlikely to be damaged. In other words, when the electronic device 1000 is impacted due to falling, the support member 20 is unlikely to be folded.

Refer to FIG. 13 and FIG. 14A. For example, the first inward foldable plate 3101 may be fastened to the first connection part 222 of the first bent part 22 through an adhesive layer (not shown in the figure). The second inward foldable plate 3102 may also be fastened to the second connection part 224 of the first bent part 22 through an adhesive layer (not shown in the figure). In this way, in a folding process of the electronic device 1000, both the first inward foldable plate 3101 and the second inward foldable plate 3102 may pull, through the first bent part 22 of the support member 20, the second display area 12 of the display panel 10 to be inward folded (that is, bent in a direction close to the first hinge structure 3103), and therefore, the second display area 12 of the display panel 10 is prevented from arching in a direction away from the first hinge structure 3103, that is, the second display area 12 of the display panel 10 is prevented from arching. In addition, in a process of unfolding the electronic device 1000, both the first inward foldable plate 3101 and the second inward foldable plate 3102 may drive, through the first bent part 22 of the support member 20, the second display area 12 of the display panel 10 to unfold.

It may be understood that the first inward foldable plate 3101 is fastened to the first connection part 222 of the first bent part 22 through an adhesive layer (not shown in the figure), and the second inward foldable plate 3102 is fastened to the second connection part 224 of the first bent part 22 through an adhesive layer (not shown in the figure). In this way, when the electronic device 1000 is in the unfolded state or the folded state (including the first folded state and the second folded state), neither the first connection part 222 nor the second connection part 224 of the first bent part 22 is bent, in other words, both the first connection part 222 and the second connection part 224 of the first bent part 22 are non-bent parts. In another implementation, when the electronic device 1000 is in the unfolded state or the folded state (including the first folded state and the second folded state), the first connection part 222 and the second connection part 224 of the first bent part 22 may be bent. The bending direction is not specifically limited. For example, when the first inward foldable plate 3101 is not connected to the first connection part 222 of the first bent part 22, and the first outward foldable plate is not connected to the second connection part 224 of the first bent part 22, the first connection part 222 and the second connection part 224 may be bent with bending of the first bent sub-part 221, the first bent main part 223, and the second bent sub-part 225.

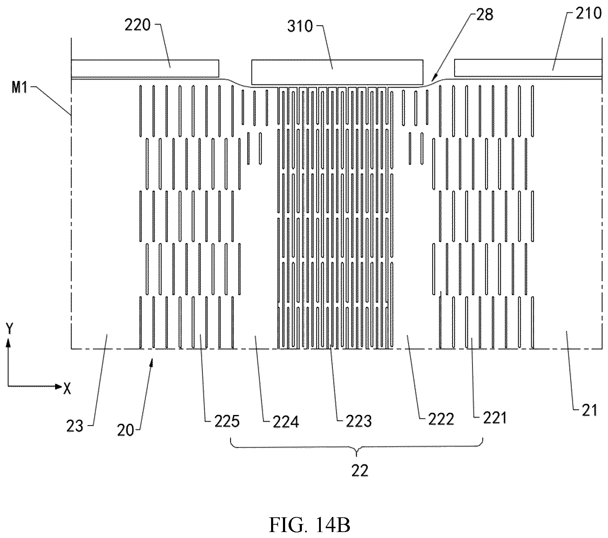

FIG. 14B is a diagram of a position relationship between the support member 20 shown in FIG. 10 and the first housing 210, the second housing 220, and the first foldable mechanism 310.

As shown in FIG. 14B, for example, the first bent part 22 of the support member 20 is provided with a first recessed area 28 (FIG. 10 also shows the first recessed area 28). The first recessed area 28 may be formed by recessing a side edge of the first bent part 22 toward the middle part of the first bent part 22. In other words, the first recessed area 28 forms an opening on the side edge of the first bent part 22.

For example, there may be two first recessed areas 28. One is located on an upper end part of the first bent part 22, and the other is located on a lower end part of the first bent part 22. FIG. 10 shows only the first recessed area 28 on the lower end part of the first bent part 22 in FIG. 6. In another implementation, there may alternatively be one first recessed area 28. One first recessed area 28 may be located on the upper end part or the lower end part of the first bent part 22.

As shown in FIG. 14B, the first recessed area 28 may be used to dispose a portion of an end part of the first foldable mechanism 310 (for example, a portion of an end cover of the first foldable mechanism 310, also referred to as a part of a T-shaped part). In other words, a portion of the end part of the first foldable mechanism 310 may be located in the first recessed area 28. In this way, the first foldable mechanism 310 may use a space of the support member 20 in the Y-axis direction, that is, the first foldable mechanism 310 and the support member 20 have an overlapping area in the Y-axis direction. This helps reduce a black-edge area of the electronic device 1000, that is, helps the electronic device 1000 implement a narrow bezel design.

For example, the first recessed area 28 may extend from the first bent sub-part 221 to the second bent sub-part 225. In other words, the first recessed area 28 forms an opening on a side edge of the first bent sub-part 221, a side edge of the first connection part 222, a side edge of the first bent main part 223, a side edge of the second connection part 224, and a side edge of the second bent sub-part 225. In this case, a size of the first recessed area 28 is large, and the first foldable mechanism 310 may use more space of the support member 20 in the Y-axis direction. This is more conducive to reducing a black-edge area of the electronic device 1000, that is, more conducive to implementing a narrow-bezel design of the electronic device 1000. In another implementation, a disposing position of the first recessed area 28 is not specifically limited, for example, the first recessed area 28 may form an opening on a side edge of the first bent sub-part 221 and/or a side edge of the first connection part 222 and/or a side edge of the first bent main part 223. In other words, the first recessed area 28 may form an opening on any one or any two or all of the side edge of the first bent sub-part 221, the side edge of the first connection part 222, or the side edge of the first bent main part 223.

The foregoing specifically describes structures and connection relationships of the inward foldable mechanism 310, the second display area 12 of the display panel 10, and the first bent part 22 of the support member 20 with reference to related accompanying drawings. The following specifically describes structures and connection relationships of the outward foldable mechanism 320, the fourth display area 14 of the display panel 10, and the second bent part 24 of the support member 20 with reference to related accompanying drawings.

Refer to FIG. 3 to FIG. 5. In an implementation, the outward foldable mechanism 320 includes a first outward foldable plate 3201, a second outward foldable plate 3202, and a second hinge structure 3203. The first outward foldable plate 3201, the second outward foldable plate 3202, and the second hinge structure 3203 may be connected in a manner like a rotatable connection or a slidable connection. This is not specifically limited in this application.

In another implementation, a structure of the outward foldable mechanism 320 is not specifically limited. For example, although FIG. 3 to FIG. 5 show only that the outward foldable mechanism 320 includes the first outward foldable plate 3201 and the second outward foldable plate 3202. In another implementation, the outward foldable mechanism 320 may further include a third outward foldable plate, ..., and an N^{th} outward foldable plate, where N is an integer greater than 2.

Refer to FIG. 4. With reference to FIG. 1, when the electronic device 1000 is unfolded to the unfolded state, the first outward foldable plate 3201, the second outward foldable plate 3202, and the second hinge structure 3203 may be unfolded relative to each other. In this case, the first outward foldable plate 3201 may support the third part 100C of the display module 100. The second hinge structure 3203 may support the fourth part 100D of the display module 100. The second outward foldable plate 3202 may support the fifth part 100E of the display module 100. In this way, when the electronic device 1000 is in the unfolded state, and the third part 100C, the fourth part 100D, and the fifth part 100E of the display module 100 are subject to pressing force, squeezing force, impact force, or the like, the first outward foldable plate 3201, the second outward foldable plate 3202, and the second hinge structure 3203 may be configured to improve a pressure resistance capability and an impact resistance capability of the third part 100C, the fourth part 100D, and the fifth part 100E, in other words, it is ensured that the third part 100C, the fourth part 100D, and the fifth part 100E are not prone to a problem like a depression.

Refer to FIG. 5. With reference to FIG. 3, when the electronic device 1000 is folded to the second folded state, the first outward foldable plate 3201 and the second outward foldable plate 3202 are close to each other. In this case, the first outward foldable plate 3201 may be configured to support the third part 100C of the display module 100. The second hinge structure 3203 may be configured to support the fourth part 100D of the bent display module 100. The second outward foldable plate 3202 may be configured to support the fifth part 100E of the display module 100. In this way, when the electronic device 1000 is in the second folded state, and the third part 100C, the fourth part 100D, and the fifth part 100E of the display module 100 are subject to pressing force, squeezing force, impact force, or the like, the first outward foldable plate 3201, the second outward foldable plate 3202, and the second hinge structure 3203 may be configured to improve a pressure resistance capability and an impact resistance capability of the third part 100C, the fourth part 100D, and the fifth part 100E, in other words, it is ensured that the third part 100C, the fourth part 100D, and the fifth part 100E are not prone to a problem like a depression.

Refer to FIG. 4. When the electronic device 1000 is folded to the first folded state, a state of the outward foldable mechanism 320 and a relationship between the outward foldable mechanism 320 and the display module 100 are the same as a state of the outward foldable mechanism 320 and a relationship between the outward foldable mechanism 320 and the display module 100 when the electronic device 1000 is folded to the second folded state. Details are not specifically described herein again.

For example, the first outward foldable plate 3201 may be fastened to the third part 100C of the display module 100. The second hinge structure 3203 may be fastened to the fourth part 100D of the display module 100. The second outward foldable plate 3202 may be fastened to the fifth part 100E of the display module 100. In this way, in a process of folding or unfolding the electronic device 1000, the first outward foldable plate 3201 may drive the third part 100C of the display module 100 to be folded or unfolded, the second hinge structure 3203 may drive the fourth part 100D of the display module 100 to be folded or unfolded, and the second outward foldable plate 3202 may drive the fifth part 100E of the display module 100 to be folded or unfolded.

It may be understood that the fourth part 100D of the display module 100 is exposed regardless of whether the electronic device 1000 is in the unfolded state or the first folded state or the second folded state. In this way, for a structure design of the fourth part 100D of the display module 100, sufficient stiffness needs to be ensured, so that when the fourth part 100D of the display module 100 is subject to pressing force, squeezing force, impact force, or the like, the fourth part 100D has a sufficient pressure resistance capability and a sufficient impact resistance capability, to ensure that the fourth part 100D is not prone to a problem like a depression. In addition, it needs to be ensured that the fourth part 100D has sufficient flexibility, so that the electronic device 1000 can be bent in the unfolding or folding process. The following specifically describes a structure of the fourth part 100D of the display module 100 with reference to related accompanying drawings. As shown in FIG. 6 to FIG. 8, stiffness of the first fastening part 21, stiffness of the second fastening part 23, and stiffness of the third fastening part 25 of the support member 20 are all greater than stiffness of the second bent part 24 of the support member 20. In other words, the stiffness of the second bent part 24 of the support member 20 is less than the stiffness of the first fastening part 21 of the support member 20. The stiffness of the second bent part 24 of the support member 20 is less than the stiffness of the second fastening part 23 of the support member 20. The stiffness of the second bent part 24 of the support member 20 is also less than the stiffness of the third fastening part 25 of the support member 20. In other words, among the first fastening part 21, the second fastening part 23, the second bent part 24, and the third fastening part 25, the second bent part 24 has minimum stiffness.

It may be understood that among the first fastening part 21, the second fastening part 23, the second bent part 24, and the third fastening part 25, the second bent part 24 has minimum stiffness. In this way, stiffness of the fourth part 100D of the display module 100 including the fourth display area 14 of the display panel 10 and the second bent part 24 of the support member 20 may be small. In this case, when the electronic device 1000 is in the first folded state or the second folded state, the fourth part 100D of the display module 100 is more likely to be bent.

It may be understood that there are a plurality of implementations in a solution in which the stiffness of the second bent part 24 is less than the stiffness of the second fastening part 23.

In an implementation, a material of the second bent part 24 is the same as a material of the second fastening part 23. In a solution, the second bent part 24 may be provided with a through hole or a groove, and the second fastening part 23 is provided with no through hole or groove, so that the stiffness of the second bent part 24 is less than the stiffness of the second fastening part 23. In another solution, both the second bent part 24 and the second fastening part 23 are provided with through holes or grooves. An example in which both the second bent part 24 and the second fastening part 23 are provided with through holes is used for description. In this case, a quantity of through holes of the second bent part 24 may be set to be different from a quantity of through holes of the second fastening part 23, a size of the through hole of the second bent part 24 may be set to be different from a size of the through hole of the second fastening part 23, and/or a shape of the through hole of the second bent part 24 is different from a shape of the through hole of the second fastening part 23, so that the stiffness of the second bent part 24 is less than the stiffness of the second fastening part 23. In another solution, both the second bent part 24 and the second fastening part 23 are provided with through holes. In this case, a thickness of the second bent part 24 may be set to be less than a thickness of the second fastening part 23, and/or a weight per unit volume of the second bent part 24 may be set to be less than a weight per unit volume of the second fastening part 23, so that the stiffness of the second bent part 24 is less than the stiffness of the second fastening part 23.

In an implementation, a material of the second bent part 24 may be set to be different from a material of the second fastening part 23, so that the stiffness of the second bent part 24 is less than the stiffness of the second fastening part 23. For example, the material of the second bent part 24 is a flexible material (for example, rubber), and the material of the second fastening part 23 is a metal material (for example, stainless steel). In another implementation, the material of the second bent part 24 is set to be different from the material of the second fastening part 23, and the through hole is provided on the second bent part 24, so that the stiffness of the second bent part 24 is less than the stiffness of the second fastening part 23.

It may be understood that there are also a plurality of implementations for a solution in which the stiffness of the second bent part 24 is less than the stiffness of the third fastening part 25 and a solution in which the stiffness of the second bent part 24 is less than the stiffness of the first fastening part 21. For this implementation, refer to a solution in which the stiffness of the second bent part 24 is less than the stiffness of the second fastening part 23. Details are not specifically described herein again.

The following specifically describes structures of the second fastening part 23, the second bent part 24, and the third fastening part 25 with reference to related accompanying drawings according to an implementation.

As shown in FIG. 6 to FIG. 8, for example, none of the first fastening part 21, the second fastening part 23, and the third fastening part 25 is provided with a through hole, a groove, or the like. The first fastening part 21, the second fastening part 23, and the third fastening part 25 each may be a complete plate-like structure. In this way, the stiffness of the first fastening part 21, the stiffness of the second fastening part 23, and the stiffness of the third fastening part 25 are all large.

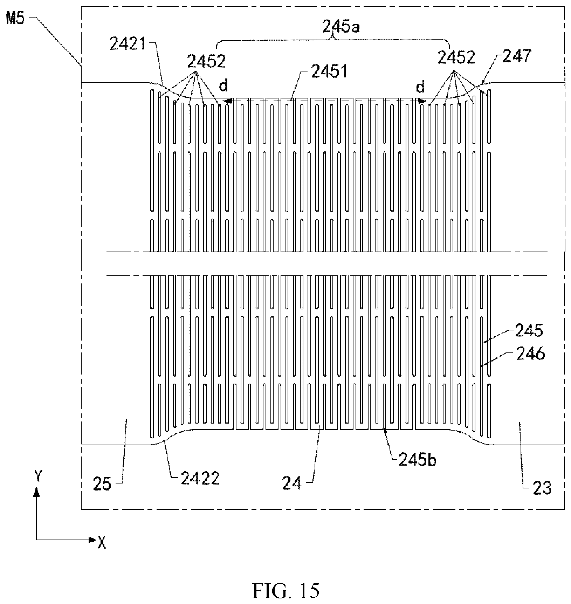

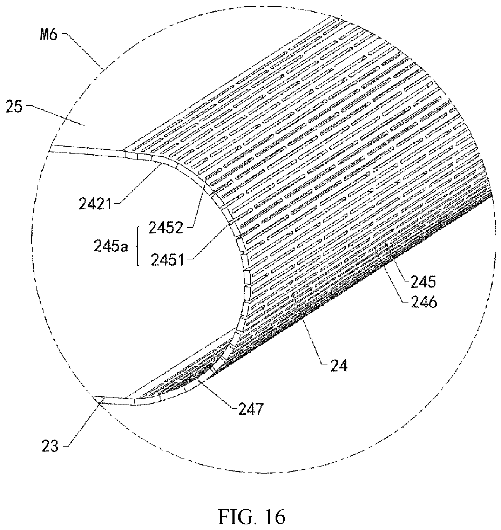

FIG. 15 is an enlarged view of the support member 20 shown in FIG. 6 at M5 according to an implementation. FIG. 16 is an enlarged view of the support member 20 shown in FIG. 8 at M6 according to an implementation.

As shown in FIG. 15 and FIG. 16, the second bent part 24 is provided with a plurality of rows of penetrating hole groups 245. The plurality of rows of penetrating hole groups 245 may be spaced away from each other in the Y-axis direction. The penetrating hole group 245 includes a plurality of penetrating holes 246 that are spaced away from each other. The plurality of penetrating holes 246 may be spaced away from each other in the X-axis direction. It may be understood that, for an arrangement manner of the penetrating hole groups 245 and an arrangement manner of the penetrating holes 246, refer to the arrangement manner of the through hole groups 228 of the first bent main part 223 of the first bent part 22 and the arrangement manner of the through holes 2281 (refer to FIG. 10 to FIG. 12). Details are not specifically described herein again. In another implementation, the arrangement manner of the penetrating hole groups 245 and the arrangement manner of the penetrating holes 246 may also be different from the arrangement manner of the through hole groups 228 of the first bent main part 223 of the first bent part 22 and the arrangement manner of the through holes 2281 (refer to FIG. 10 to FIG. 12). For example, a distance between two adjacent holes may be flexibly set according to a requirement.

For example, the penetrating hole 246 is bar-shaped. A length extension direction of the penetrating hole 246 may be the Y-axis. In another implementation, a shape of the penetrating hole 246 may alternatively be a dumbbell shape, a rhombus shape, a square shape, a waist circle shape, or the like. This is not specifically strictly limited in this application.

For example, the penetrating hole 246 penetrates two plate surfaces of the second bent part 24 in the Z-axis direction.

As shown in FIG. 15 and FIG. 16, for example, the plurality of rows of penetrating hole groups 245 include a first-row penetrating hole group 245a and a last-row penetrating hole group 245b. The first-row penetrating hole group 245a is close to a first side edge 2421 of the second bent part 24. The last-row penetrating hole group 245b is close to a second side edge 2422 of the second bent part 24.

It may be understood that the first-row penetrating hole group 245a and the last-row penetrating hole group 245b may same or similar structures, symmetrical or partially symmetrical structures, or different structures. In this implementation, the first-row penetrating hole group 245a and the last-row penetrating hole group 245b are symmetrical structures. For a basic design of a component structure of the last-row penetrating hole group 245b, a design of a connection relationship between components, and a design of a connection relationship between a component and another structure other than the component, refer to a related solution of the first-row penetrating hole group 245a. In addition, the first-row penetrating hole group 245a and the last-row penetrating hole group 245b are allowed to be slightly different in a detailed structure or a position arrangement of components. It may be understood that the first-row penetrating hole group 245a and the last-row penetrating hole group 245b are symmetrical structures. Therefore, the first-row penetrating hole group 245a is used as an example for description below, and a specific structure of the last-row penetrating hole group 245b is not described herein again.

The first-row penetrating hole group 245a includes first-type penetrating holes 2451 and second-type penetrating holes 2452. The second-type penetrating holes 2452 are located on two sides of the first-type penetrating hole 2451. In addition, the first-type penetrating hole 2451 further penetrates the first side edge 2421 of the second bent part 24. The second-type penetrating holes 2452 are spaced away from each other on the first side edge 2421 of the second bent part 24, in other words, the second-type penetrating hole 2452 does not penetrate the first side edge 2421 of the second bent part 24. It may be understood that FIG. 15 shows a dashed line dd with double arrows. Penetrating holes 246 through which the dashed line dd with the double arrows pass form the first-type penetrating holes 2451 of the first-row penetrating hole group 245a.

It may be understood that the first-type penetrating hole 2451 is disposed to penetrate the first side edge 2421 of the second bent part 24, so that stiffness of the middle part of the first side edge 2421 of the second bent part 24 is small, that is, the middle part of the first side edge 2421 of the second bent part 24 is more likely to be bent. In addition, the second-type penetrating hole 2452 is disposed to not penetrate the first side edge 2421 of the second bent part 24, so that stiffness at two ends of the first side edge 2421 of the second bent part 24 is not small. In this way, when the electronic device 1000 is impacted due to falling, a bump with a large bending amplitude is unlikely to be generated at two ends of the first side edge 2421 of the second bent part 24, to ensure that the second bent part 24 can be restored after impact, that is, the second bent part 24 is unlikely to be damaged. In other words, when the electronic device 1000 is impacted due to falling, the support member 20 is unlikely to be folded.

In another implementation, the second bent part 24 is provided with a plurality of rows of groove groups. The plurality of rows of groove groups include a plurality of grooves. An opening of the groove may form an opening on the second surface 24b (refer to FIG. 8) of the second bent part 24. In this way, the groove may be away from the second display area 12 of the display panel 10 (refer to FIG. 8). Certainly, in another implementation, the opening of the groove may form an opening on the first surface 24a (refer to FIG. 8) of the second bent part 24. This is not specifically limited in this application. The first surface 24a of the second bent part 24 and the second surface 24b of the second bent part 24 are disposed opposite to each other. In addition, for a manner of disposing the plurality of groove groups, refer to a manner of disposing the plurality of rows of penetrating hole groups 245. Details are not specifically described herein again.

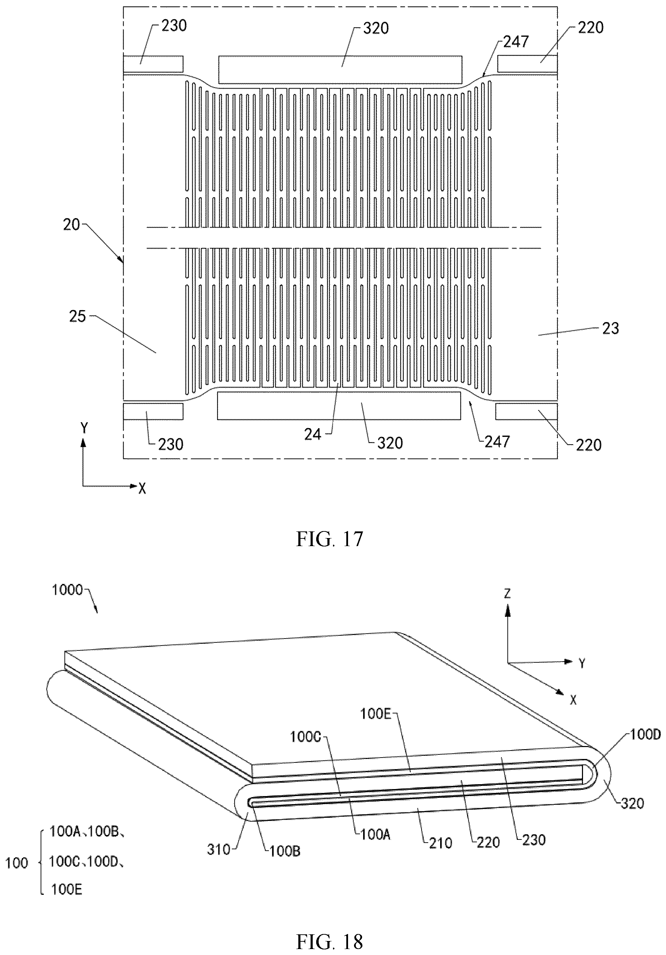

FIG. 17 is a diagram of a position relationship between the support member 20 shown in FIG. 15 and the second housing 220, the third housing 230, and the second foldable mechanism 320.

Refer to FIG. 17. As shown in FIG. 15 and FIG. 16, for example, the second bent part 24 of the support member 20 is provided with a second recessed area 247. The second recessed area 247 may be formed by recessing a side edge of the second bent part 24 toward the middle part of the second bent part 24. In other words, the second recessed area 247 may form an opening on the side edge of the second bent part 24.

For example, there may be two second recessed areas 247. One is located on an upper end part of the second bent part 24, and the other is located on a lower end part of the second bent part 24. FIG. 17 shows that both the upper end part and the lower end part of the second bent part 24 are provided with the second recessed areas 247. In another implementation, there may alternatively be one second recessed area 247. One second recessed area 247 may be located on the upper end part or the lower end part of the second bent part 24.

Refer to FIG. 17. The second recessed area 247 may be used to dispose a portion of an end part of the second foldable mechanism 320 (for example, an end cover of the second foldable mechanism 320, also referred to as a T-shaped part). In other words, a portion of the end part of the second foldable mechanism 320 may be located in the second recessed area 247. In this way, the second foldable mechanism 320 may use a space of the support member 20 in the Y-axis direction, that is, the second foldable mechanism 320 and the support member 20 have an overlapping area in the Y-axis direction. This helps reduce a black-edge area of the electronic device 1000, that is, helps the electronic device 1000 implement a narrow bezel design.

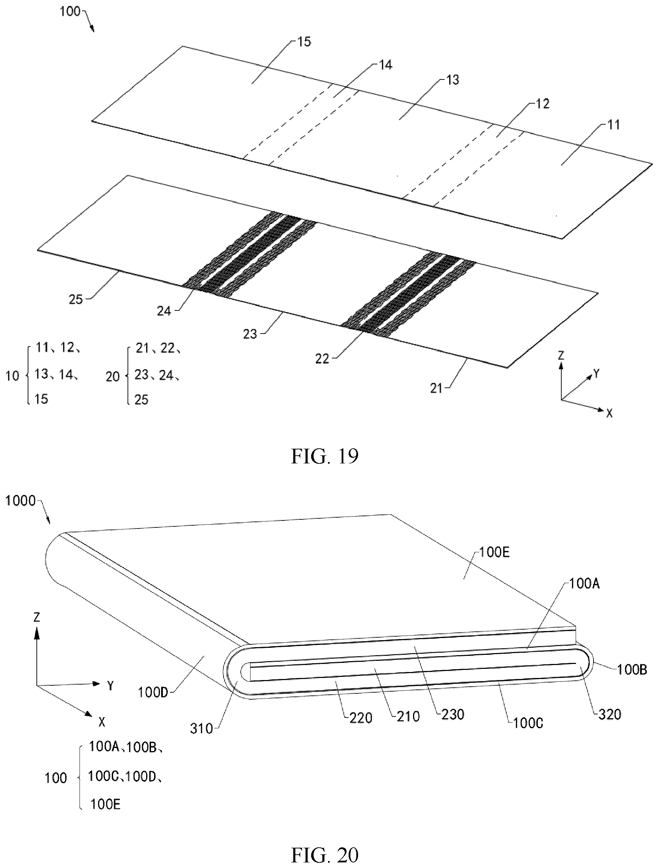

FIG. 18 is a diagram of a structure of the electronic device 1000 shown in FIG. 1 in a second folded state according to another implementation. FIG. 19 is a partial sectional view of the display module 100 shown in FIG. 14A according to an implementation.

As shown in FIG. 18 and FIG. 19, it may be understood that the foregoing specifically describes, with reference to related accompanying drawings, that the second foldable mechanism 320 is an outward foldable mechanism 320. In this implementation, the second foldable mechanism 320 may alternatively be an inward foldable mechanism. It may be understood that, when both the first foldable mechanism 310 and the second foldable mechanism 320 are inward foldable mechanisms, the display module 100 may be in the unfolded state when the electronic device 1000 is in the unfolded state, and the display module 100 may be in various shapes when the electronic device 1000 is in the second folded state, for example, an S type or a G type. FIG. 18 shows that the display module 100 may be in a G shape when the electronic device 1000 is in the second folded state.

It may be understood that, when both the first foldable mechanism 310 and the second foldable mechanism 320 are inward foldable mechanisms, the second foldable mechanism 320 also needs to enclose an accommodation space when the electronic device 1000 is in the second folded state, to accommodate the fourth part 100D of the display module 100. In this implementation, the fourth part 100D of the display module 100 that further has a good bending capability while ensuring specific stiffness is disposed, so that when the electronic device 1000 is in the first folded state or the second folded state, the fourth part 100D of the display module 100 may be disposed in the accommodation space 3104, in other words, the fourth part 100D of the display module 100 may adapt to the second foldable mechanism 320. In addition, the fourth part 100D of the display module 100 in this application may adapt to accommodation spaces of different shapes of the second foldable mechanism 320. Specifically, the fourth part 100D of the display module 100 includes the fourth display area 14 of the display panel 10 and the second bent part 24 of the support member 20. In this way, for a structure of the second bent part 24 of the support member 20 in this implementation, refer to the structure of the first bent part 22 of the support member 20 in the foregoing implementations. Specifically, details are not described again in this implementation.

FIG. 20 is a diagram of a structure of the electronic device 1000 shown in FIG. 1 in a second folded state according to another implementation.

Refer to FIG. 20. The foregoing specifically describes, with reference to related accompanying drawings, that the first foldable mechanism 310 is an inward foldable mechanism. In this implementation, the first foldable mechanism 310 may alternatively be an outward foldable mechanism. It may be understood that, when both the first foldable mechanism 310 and the second foldable mechanism 320 are outward foldable mechanisms, the display module 100 may be in the unfolded state when the electronic device 1000 is in the unfolded state, and the display module 100 may be in various shapes when the electronic device 1000 is in the second folded state, for example, an S type or a G type. FIG. 20 shows that the display module 100 may be in a G shape when the electronic device 1000 is in the second folded state.

It may be understood that, although the first foldable mechanism 310 is an outward foldable mechanism, the first bent part 22 of the support member 20 still uses a structure of the first bent part 22 of the support member 20 shown in FIG. 6 to FIG. 12. In other words, the structure of the first bent part 22 of the support member 20 shown in FIG. 6 to FIG. 12 may be not only applicable to the inward foldable mechanism 310 shown in FIG. 13 and FIG. 14A, but also applicable to the outward foldable mechanism. Details are not specifically described herein again.

It may be understood that, when the structure of the first bent part 22 of the support member 20 shown in FIG. 6 to FIG. 12 is used in the outward foldable mechanism, the first bent part 22 of the support member 20 can also well meet bending requirements of the outward foldable mechanism at different positions. Details are as follows:
It may be understood that, among the first bent sub-part 221, the first connection part 222, the first bent main part 223, the second connection part 224, and the second bent sub-part 225 of the first bent part 22, the first bent main part 223 has minimum stiffness, and therefore, the first bent main part 223 has a better bending capability, that is, the first bent main part 223 can be bent better when the electronic device 1000 is in the second folded state. In this way, the first connection part 222 and the second connection part 224 of the first bent part 22 can be disposed close to each other, and the first bent sub-part 221 and the second bent sub-part 225 of the first bent part 22 can be disposed close to each other. In this case, the first foldable mechanism 310 easily folds the second display area 12 of the display panel 10 into an outer screen of the electronic device 1000.

For example, stiffness of the first bent sub-part 221 of the first bent part 22 is set to be less than stiffness of the first connection part 222 of the first bent part 22, and stiffness of the second bent sub-part 225 of the first bent part 22 is less than stiffness of the second connection part 224 of the first bent part 22, so that the stiffness of both the first bent sub-part 221 and the second bent sub-part 225 of the first bent part 22 is in an intermediate state. In this way, when both the first bent sub-part 221 and the second bent sub-part 225 of the first bent part 22 have a specific bending capability, stiffness is not easily reduced to a large extent, and the first bent sub-part 221 and the second bent sub-part 225 are ensured to have a squeezing resistance capability and an impact resistance capability.

It may be understood that the foregoing electronic device 1000 is described by using an example in which the electronic device 1000 is folded twice. In another implementation, the electronic device 1000 may alternatively be folded more than twice. For example, the electronic device 1000 may be folded three times, and the electronic device 1000 is folded in a "W" shape. The electronic device 1000 may alternatively be folded four times, five times, six times, or the like.

It should be noted that embodiments in this application and features in embodiments may be combined with each other without a conflict, and any combination of features in different embodiments also falls within the protection scope of this application. In other words, the foregoing described plurality of embodiments may be further combined according to an actual requirement.

It should be noted that all the foregoing accompanying drawings are example figures of this application, and do not represent actual sizes of products. In addition, a size proportional relationship between components in the accompanying drawings is not intended to limit an actual product in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (1000), comprising a first housing (210), a second housing (220), a third housing (230), a first foldable mechanism (310), a second foldable mechanism (320), and a display module (100), wherein the first foldable mechanism (310) is connected to the first housing (210) and the second housing (220), and the second foldable mechanism (320) is connected to the second housing (220) and the third housing (230);
the display module (100) comprises a display panel (10) and a support member (20), and the support member (20) is fastened to a non-display surface of the display panel (10);
the support member (20) has a first fastening part (21), a first bent part (22), a second fastening part (23), a second bent part (24), and a third fastening part (25) that are sequentially disposed in a first direction, wherein stiffness of the first fastening part (21), stiffness of the second fastening part (23), and stiffness of the third fastening part (25) are greater than stiffness of the first bent part (22) and stiffness of the second bent part (24), and the first direction is a direction from the first housing (210) to the third housing (230) when the electronic device (1000) is in an unfolded state;
the display panel (10) has a first display area (11), a second display area (12), a third display area (13), a fourth display area (14), and a fifth display area (15) that are disposed in the first direction;
a first surface (21a) of the first fastening part (21) is fastened to the first display area (11), a first surface (22a) of the first bent part (22) is fastened to the second display area (12), a first surface (23a) of the second fastening part (23) is fastened to the third display area (13), a first surface (24a) of the second bent part (24) is fastened to the fourth display area (14), and a first surface (25a) of the third fastening part (25) is fastened to the fifth display area (15); and when the electronic device (1000) is in the unfolded state, the first surface (21a) of the first fastening part (21), the first surface (22a) of the first bent part (22), the first surface (23a) of the second fastening part (23), the first surface (24a) of the second bent part (24), and the first surface (25a) of the third fastening part (25) are located on a same surface;
a second surface (21b) of the first fastening part (21) is fastened to the first housing (210), a second surface (23b) of the second fastening part (23) is fastened to the second housing (220), and a second surface (25b) of the third fastening part (25) is fastened to the third housing (230), wherein the first surface (21a) of the first fastening part (21) is opposite to the second surface (21b) of the first fastening part (21), the first surface (23a) of the second fastening part (23) is opposite to the second surface (23b) of the second fastening part (23), and the first surface (25a) of the third fastening part (25) is opposite to the second surface (25b) of the third fastening part (25);
in a process in which the first housing (210) and the second housing (220) are unfolded or folded relative to each other, the first bent part (22) is bent; and in a process in which the second housing (220) and the third housing (230) are unfolded or folded relative to each other, the second bent part (24) is bent;
when the electronic device (1000) is in the unfolded state, the first fastening part (21), the first bent part (22), the second fastening part (23), the second bent part (24), and the third fastening part (25) form a plate-like structure;
when the electronic device (1000) is in a first folded state, the first fastening part (21), the first bent part (22), and the second fastening part (23) form a plate-like structure, the second bent part (24) is bent, the third fastening part (25) and the second fastening part (23) are stacked, and the first display area (11), the second display area (12), the third display area (13), the fourth display area (14), and the fifth display area (15) are all located on an outer side of the electronic device (1000);
when the electronic device (1000) is in a second folded state, the first bent part (22) and the second bent part (24) are bent, the first fastening part (21), the second fastening part (23), and the third fastening part (25) are stacked, the first display area (11), the second display area (12), and the third display area (13) are located in an accommodation space (26) formed by the first fastening part (21), the first bent part (22), and the second fastening part (23), and the fifth display area (15) and at least a portion of the fourth display area (14) are located on the outer side of the electronic device (1000);
the first bent part (22) comprises a first bent sub-part (221), a first bent main part (223), and a second bent sub-part (225) that are sequentially arranged in the first direction; and
in the process in which the first housing (210) and the second housing (220) are unfolded or folded relative to each other, the first bent main part (223) is bent in a folding direction, the first bent sub-part (221) and the second bent sub-part (225) are bent away from the folding direction, the first bent sub-part (221), the first bent main part (223), and the second bent sub-part (225) form an accommodation space (27), and at least a portion of the second display area (12) is located in the accommodation space (27).

2. The electronic device (1000) according to claim 1, wherein the stiffness of the first fastening part (21), the stiffness of the second fastening part (23), stiffness of the first bent sub-part (221), and stiffness of the second bent sub-part (225) are all greater than stiffness of the first bent main part (223).

3. The electronic device (1000) according to claim 2, wherein a thickness of the first fastening part (21), a thickness of the second fastening part (23), a thickness of the first bent sub-part (221), and a thickness of the second bent sub-part (225) are greater than a thickness of the first bent main part (223).

4. The electronic device (1000) according to claim 2, wherein a weight per unit volume of the first fastening part (21), a weight per unit volume of the second fastening part (23), a weight per unit volume of the first bent sub-part (221), and a weight per unit volume of the second bent sub-part (225) are greater than a weight per unit volume of the first bent main part (223).

5. The electronic device (1000) according to any one of claims 1 to 4, wherein in the first direction, a width of the first bent main part (223) is greater than a width of the first bent sub-part (221), and the width of the first bent main part (223) is greater than a width of the second bent sub-part (225).

6. The electronic device (1000) according to any one of claims 1 to 4, wherein the first bent main part (223) is provided with a plurality of rows of through holes (2281), and the through hole (2281) penetrates two plate surfaces of the support member (20).

7. The electronic device (1000) according to claim 6, wherein the through hole (2281) extends in a second direction, and the second direction is parallel to the plate surface of the support member (20), and is perpendicular to the first direction.

8. The electronic device (1000) according to claim 6, wherein the through hole (2281) is bar-shaped.

9. The electronic device (1000) according to claim 6, wherein a first row of through holes (2281) of the plurality of rows of through holes (2281) penetrate a first side edge (2231) of the first bent main part (223) in the second direction; and/or a last row of through holes (2281) of the plurality of rows of through holes (2281) penetrate a second side edge (2232) of the first bent main part (223) in the second direction, wherein the second direction is parallel to the plate surface of the support member (20), and is perpendicular to the first direction.

10. The electronic device (1000) according to any one of claims 1 to 4, wherein the first bent sub-part (221) and the second bent sub-part (225) are symmetrically disposed with respect to the first bent main part (223).

11. The electronic device (1000) according to any one of claims 1 to 4, wherein the first bent part (22) further comprises a first connection part (222) and a second connection part (224);
the first connection part (222) is located between the first bent sub-part (221) and the first bent main part (223), and the second connection part (224) is located between the second bent sub-part (225) and the first bent main part (223);
stiffness of the first connection part (222) and stiffness of the second connection part (224) are greater than the stiffness of the first bent sub-part (221), the stiffness of the first bent main part (223), and the stiffness of the second bent sub-part (225); and
in the process in which the first housing (210) and the second housing (220) are unfolded or folded relative to each other, the first bent sub-part (221), the first connection part (222), the first bent main part (223), the second connection part (224), and the second bent sub-part (225) jointly form the accommodation space (27).

12. The electronic device (1000) according to claim 11, wherein the first connection part (222) and the second connection part (224) are complete plate-like structures.

13. The electronic device (1000) according to claim 11, wherein in a second direction, a second through hole (2271) or a second groove is provided on at least one side edge of the first connection part (222), wherein the second direction is parallel to a plate surface of the support member (20), and is perpendicular to the first direction.

14. The electronic device (1000) according to claim 13, wherein the second through holes (2271) or the second grooves are spaced away from each other on a side edge of the first connection part (222).

15. The electronic device (1000) according to claim 11, wherein a thickness of the first connection part (222) and a thickness of the second connection part (224) are greater than the thickness of the first bent sub-part (221), the thickness of the first bent main part (223), and the thickness of the second bent sub-part (225); or
a weight per volume of the first connection part (222) and a weight per volume of the second connection part (224) are greater than the weight per volume of the first bent sub-part (221), the weight per volume of the first bent main part (223), and the weight per volume of the second bent sub-part (225).

16. The electronic device (1000) according to claim 11, wherein the support member (20) is provided with a first recessed area (28), the first recessed area (28) forms an opening on a side edge of the first bent sub-part (221) and/or a side edge of the first connection part (222) and/or a side edge of the first bent main part (223) and/or a side edge of the second connection part (224) and/or a side edge of the second bent sub-part (225), and a portion of an end part of the first foldable mechanism (310) is located in the first recessed area (28).

17. The electronic device (1000) according to claim 1, wherein the first foldable mechanism (310) comprises at least a first inward foldable plate (3101) and a second inward foldable plate (3102); and
when the electronic device is in the unfolded state, both the first inward foldable plate (3101) and the second inward foldable plate (3102) are stacked with the first bent part (22).

18. The electronic device (1000) according to claim 17, wherein both the first inward foldable plate (3101) and the second inward foldable plate (3102) are partially fastened to the first bent part (22).

19. The electronic device (1000) according to claim 17, wherein the first bent part (22) further comprises a first connection part (222) and a second connection part (224), the first connection part (222) is located between the first bent sub-part (221) and the first bent main part (223), and the second connection part (224) is located between the second bent sub-part (225) and the first bent main part (223);
the first connection part (222) is fastened to the first inward foldable plate (3101), and the second connection part (224) is fastened to the second inward foldable plate (3102); and
in the process in which the first housing (210) and the second housing (220) are unfolded or folded relative to each other, the first bent sub-part (221), the first connection part (222), the first bent main part (223), the second connection part (224), and the second bent sub-part (225) jointly form the accommodation space (27).

20. The electronic device (1000) according to any one of claims 1 to 4, wherein the second bent part (24) is provided with a plurality of rows of penetrating hole groups (245), the plurality of rows of penetrating hole groups (245) are spaced away from each other in a second direction, the penetrating hole group (245) comprises a plurality of penetrating holes (246) that are spaced away from each other, the plurality of penetrating holes (246) are arranged in the first direction, the penetrating hole (246) penetrates two plate surfaces of the support member (20), and the second direction is parallel to the plate surface of the support member (20), and is perpendicular to the first direction.

21. The electronic device (1000) according to claim 20, wherein the penetrating hole (246) is bar-shaped, and the penetrating hole (246) extends in the second direction.

22. The electronic device (1000) according to claim 20, wherein the plurality of rows of penetrating hole groups (245) comprise a first-row penetrating hole group (245a), and the first-row penetrating hole group (245a) is close to a first side edge (2421) of the second bent part (24); and
the first-row penetrating hole group (245a) comprises first-type penetrating holes (2451) and second-type penetrating holes (2452), the second-type penetrating holes (2452) are located on two sides of the first-type penetrating hole (2451), the first-type penetrating hole (2451) further penetrates the first side edge (2421), and the second-type penetrating holes (2452) are spaced away from each other on the first side edge (2421).

23. The electronic device (1000) according to claim 20, wherein the second bent part (24) is provided with a second recessed area (247), the second recessed area (247) forms an opening on a first side edge (2411) or a second side edge (2412) of the second bent part (24), and a portion of an end part of the second foldable mechanism (320) is located in the second recessed area (247).

24. The electronic device (1000) according to any one of claims 1 to 4, wherein the second surface (21b) of the first fastening part (21) is fastened to the first housing (210) through a first adhesive layer (1), the second surface (23b) of the second fastening part (23) is fastened to the second housing (220) through a second adhesive layer (2), and the second surface (25b) of the third fastening part (25) is fastened to the third housing (230) through a third adhesive layer (3); and
both the first adhesive layer (1) and the second adhesive layer (2) are annular, and the third adhesive layer (3) is C-shaped.

25. A display module (100), comprising a display panel (10) and a support member (20), wherein the support member (20) is fastened to a non-display surface of the display panel (10);
the support member (20) has a first fastening part (21), a first bent part (22), a second fastening part (23), a second bent part (24), and a third fastening part (25) that are sequentially disposed in a first direction, wherein stiffness of the first fastening part (21), stiffness of the second fastening part (23), and stiffness of the third fastening part (25) are greater than stiffness of the first bent part (22) and stiffness of the second bent part (24), and the first direction is a direction from the first fastening part (21) to the third fastening part (25) when the support member (20) is in an unfolded state;
the display panel (10) has a first display area (11), a second display area (12), a third display area (13), a fourth display area (14), and a fifth display area (15) that are disposed in the first direction;
the first fastening part (21) is fastened to the first display area (11), the first bent part (22) is fastened to the second display area (12), the second fastening part (23) is fastened to the third display area (13), the second bent part (24) is fastened to the fourth display area (14), and the third fastening part (25) is fastened to the fifth display area (15);
in a process in which the first fastening part (21) and the second fastening part (23) are unfolded or folded relative to each other, the first bent part (22) is bent; and in a process in which the second fastening part (23) and the third fastening part (25) are unfolded or folded relative to each other, the second bent part (24) is bent;
when the support member (20) is in the unfolded state, the first fastening part (21), the first bent part (22), the second fastening part (23), the second bent part (24), and the third fastening part (25) form a plate-like structure;
when the support member (20) is in a first folded state, the first fastening part (21), the first bent part (22), and the second fastening part (23) form a plate-like structure, the second bent part (24) is bent, the third fastening part (25) and the second fastening part (23) are stacked, and the first display area (11), the second display area (12), the third display area (13), the fourth display area (14), and the fifth display area (15) are all located on an outer side of the support member (20);
when the support member (20) is in a second folded state, the first bent part (22) and the second bent part (24) are bent, the first fastening part (21), the second fastening part (23), and the third fastening part (25) are stacked, the first display area (11), the second display area (12), and the third display area (13) are located in an accommodation space (26) formed by the first fastening part (21), the first bent part (22), and the second fastening part (23), and the fifth display area (15) and at least a portion of the fourth display area (14) are located on the outer side of the support member (20);
the first bent part (22) comprises a first bent sub-part (221), a first bent main part (223), and a second bent sub-part (225) that are sequentially arranged in the first direction; and
in the process in which the first fastening part (21) and the second fastening part (23) are unfolded or folded relative to each other, the first bent main part (223) is bent in a folding direction, the first bent sub-part (221) and the second bent sub-part (225) are bent away from the folding direction, the first bent sub-part (221), the first bent main part (223), and the second bent sub-part (225) form an accommodation space (27), and at least a portion of the second display area (12) is located in the accommodation space (27).

26. The display module (100) according to claim 25, wherein the stiffness of the first fastening part (21), the stiffness of the second fastening part (23), stiffness of the first bent sub-part (221), and stiffness of the second bent sub-part (225) are all greater than stiffness of the first bent main part (223).

27. The display module (100) according to claim 25 or 26, wherein in the first direction, a width of the first bent main part (223) is greater than a width of the first bent sub-part (221), and the width of the first bent main part (223) is greater than a width of the second bent sub-part (225).

28. The display module (100) according to claim 25 or 26, wherein the first bent main part (223) is provided with a plurality of rows of through holes (2281), and the through hole (2281) penetrates two plate surfaces of the support member (20).

29. The display module (100) according to claim 25 or 26, wherein the first bent part (22) further comprises a first connection part (222) and a second connection part (224);
the first connection part (222) is located between the first bent sub-part (221) and the first bent main part (223), and the second connection part (224) is located between the second bent sub-part (225) and the first bent main part (223);
stiffness of the first connection part (222) and stiffness of the second connection part (224) are greater than the stiffness of the first bent sub-part (221), the stiffness of the first bent main part (223), and the stiffness of the second bent sub-part (225); and
in the process in which the first fastening part (21) and the second fastening part (23) are unfolded or folded relative to each other, the first bent sub-part (221), the first connection part (222), the first bent main part (223), the second connection part (224), and the second bent sub-part (225) jointly form the accommodation space (27).

30. The display module (100) according to claim 29, wherein in a second direction, a second through hole (2271) or a second groove is provided on at least one side edge of the first connection part (222), wherein the second direction is parallel to a plate surface of the support member (20), and is perpendicular to the first direction.

31. The display module (100) according to claim 29, wherein the support member (20) is provided with a first recessed area (28), the first recessed area (28) form an opening on a side edge of the first bent sub-part (221) and/or a side edge of the first connection part (222) and/or a side edge of the first bent main part (223) and/or a side edge of the second connection part (224) and/or a side edge of the second bent sub-part (225), and the first recessed area (28) is used to dispose a portion of an end part of a first foldable mechanism (310).

32. The display module (100) according to claim 25 or 26, wherein the second bent part (24) is provided with a plurality of rows of penetrating hole groups (245), the plurality of rows of penetrating hole groups (245) are spaced away from each other in a second direction, the penetrating hole group (245) comprises a plurality of penetrating holes (246) that are spaced away from each other, the plurality of penetrating holes (246) are arranged in the first direction, the penetrating hole (246) penetrates two plate surfaces of the support member (20), and the second direction is parallel to the plate surface of the support member (20), and is perpendicular to the first direction.

33. The display module (100) according to claim 32, wherein the plurality of rows of penetrating hole groups (245) comprise a first-row penetrating hole group (245a), and the first-row penetrating hole group (245a) is close to a first side edge (2421) of the second bent part (24); and
the first-row penetrating hole group (245a) comprises first-type penetrating holes (2451) and second-type penetrating holes (2452), the second-type penetrating holes (2452) are located on two sides of the first-type penetrating hole (2451), the first-type penetrating hole (2451) further penetrates the first side edge (2421), and the second-type penetrating holes (2452) are spaced away from each other on the first side edge (2421).

34. A support member (20), comprising a first fastening part (21), a first bent part (22), a second fastening part (23), a second bent part (24), and a third fastening part (25) that are sequentially disposed in a first direction, wherein stiffness of the first fastening part (21), stiffness of the second fastening part (23), and stiffness of the third fastening part (25) are greater than stiffness of the first bent part (22) and stiffness of the second bent part (24), and the first direction is a direction from the first fastening part (21) to the third fastening part (25) when the support member (20) is in an unfolded state;
in a process in which the first fastening part (21) and the second fastening part (23) are unfolded or folded relative to each other, the first bent part (22) is bent; and in a process in which the second fastening part (23) and the third fastening part (25) are unfolded or folded relative to each other, the second bent part (24) is bent;
when the support member (20) is in the unfolded state, the first fastening part (21), the first bent part (22), the second fastening part (23), the second bent part (24), and the third fastening part (25) form a plate-like structure;
when the support member (20) is in a first folded state, the first fastening part (21), the first bent part (22), and the second fastening part (23) form a plate-like structure, the second bent part (24) is bent, and the third fastening part (25) and the second fastening part (23) are stacked;
when the support member (20) is in a second folded state, the first bent part (22) and the second bent part (24) are bent, and the first fastening part (21), the second fastening part (23), and the third fastening part (25) are stacked;
the first bent part (22) comprises a first bent sub-part (221), a first bent main part (223), and a second bent sub-part (225) that are sequentially arranged in the first direction; and
in the process in which the first fastening part (21) and the second fastening part (23) are unfolded or folded relative to each other, the first bent main part (223) is bent in a folding direction, the first bent sub-part (221) and the second bent sub-part (225) are bent away from the folding direction, the first bent sub-part (221), the first bent main part (223), and the second bent sub-part (225) form an accommodation space (27), and the accommodation space (27) is used to dispose at least a portion of the second display area (12).

35. The support member (20) according to claim 34, wherein the stiffness of the first fastening part (21), the stiffness of the second fastening part (23), stiffness of the first bent sub-part (221), and stiffness of the second bent sub-part (225) are all greater than stiffness of the first bent main part (223).

36. The support member (20) according to claim 34 or 35, wherein in the first direction, a width of the first bent main part (223) is greater than a width of the first bent sub-part (221), and the width of the first bent main part (223) is greater than a width of the second bent sub-part (225).

37. The support member (20) according to claim 34 or 35, wherein the first bent main part (223) is provided with a plurality of rows of through holes (2281), and the through hole (2281) penetrates two plate surfaces of the support member (20).

38. The support member (20) according to claim 34 or 35, wherein the first bent part (22) further comprises a first connection part (222) and a second connection part (224);
the first connection part (222) is located between the first bent sub-part (221) and the first bent main part (223), and the second connection part (224) is located between the second bent sub-part (225) and the first bent main part (223);
stiffness of the first connection part (222) and stiffness of the second connection part (224) are greater than the stiffness of the first bent sub-part (221), the stiffness of the first bent main part (223), and the stiffness of the second bent sub-part (225); and
in the process in which the first fastening part (21) and the second fastening part (23) are unfolded or folded relative to each other, the first bent sub-part (221), the first connection part (222), the first bent main part (223), the second connection part (224), and the second bent sub-part (225) jointly form the accommodation space (27).

39. The support member (20) according to claim 38, wherein in a second direction, a second through hole (2271) or a second groove is provided on at least one side edge of the first connection part (222), wherein the second direction is parallel to a plate surface of the support member (20), and is perpendicular to the first direction.

40. The support member (20) according to claim 38, wherein the support member (20) is provided with a first recessed area (28), the first recessed area (28) form an opening on a side edge of the first bent sub-part (221) and/or a side edge of the first connection part (222) and/or a side edge of the first bent main part (223) and/or a side edge of the second connection part (224) and/or a side edge of the second bent sub-part (225), and the first recessed area (28) is used to dispose a portion of an end part of a first foldable mechanism (310).

41. The support member (20) according to claim 34 or 35, wherein the second bent part (24) is provided with a plurality of rows of penetrating hole groups (245), the plurality of rows of penetrating hole groups (245) are spaced away from each other in a second direction, the penetrating hole group (245) comprises a plurality of penetrating holes (246) that are spaced away from each other, the plurality of penetrating holes (246) are arranged in the first direction, the penetrating hole (246) penetrates two plate surfaces of the support member (20), and the second direction is parallel to the plate surface of the support member (20), and is perpendicular to the first direction.

42. The support member (20) according to claim 41, wherein the plurality of rows of penetrating hole groups (245) comprise a first-row penetrating hole group (245a), and the first-row penetrating hole group (245a) is close to a first side edge (2421) of the second bent part (24); and
the first-row penetrating hole group (245a) comprises first-type penetrating holes (2451) and second-type penetrating holes (2452), the second-type penetrating holes (2452) are located on two sides of the first-type penetrating hole (2451), the first-type penetrating hole (2451) further penetrates the first side edge (2421), and the second-type penetrating holes (2452) are spaced away from each other on the first side edge (2421).
